(19) Europäisches Patentamt
European Patent Office
Office européen des brevets

(11) EP 4 165 989 A1

(12) # EUROPEAN PATENT APPLICATION

(43) Date of publication:
**19.04.2023 Bulletin 2023/16**

(21) Application number: **21202518.3**

(22) Date of filing: **13.10.2021**

(51) International Patent Classification (IPC):
***A01N 37/26*** *(2006.01)* ***A01N 37/40*** *(2006.01)*
***A01N 41/06*** *(2006.01)* ***A01N 41/10*** *(2006.01)*
***A01N 57/20*** *(2006.01)* ***A01P 13/00*** *(2006.01)*
***A01N 25/30*** *(2006.01)* ***A01N 25/06*** *(2006.01)*

(52) Cooperative Patent Classification (CPC):
(C-Sets available)
**A01P 13/00; A01N 37/26; A01N 37/40;**
**A01N 41/06; A01N 41/10; A01N 57/20** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bayer CropScience LP**
**St. Louis, MO 63167 (US)**

(72) Inventor: **The designation of the inventor has not yet been filed**

(74) Representative: **BIP Patents**
**c/o Bayer Intellectual Property GmbH**
**Alfred-Nobel-Straße 50**
**40789 Monheim am Rhein (DE)**

(54) **KIT FOR PREPARING HERBICIDAL APPLICATION MIXTURES**

(57) The present invention primarily relates to kits for preparing herbicidal application mixtures (agronomic application mixtures, application compositions) comprising or consisting of two physically separate compositions in the form of Component A and Component B as defined herein. The present invention further relates to a method for producing application mixtures using said kit. Further, the present invention relates to certain compositions suitable as Components B useful as part of kits of the present invention. Also, the present invention also relates to the use of the kits of the present invention for controlling undesired vegetation and to corresponding methods.

EP 4 165 989 A1

(52) Cooperative Patent Classification (CPC): (Cont.)

C-Sets
**A01N 37/26, A01N 25/06, A01N 25/30,
A01N 37/40, A01N 41/06, A01N 41/10,
A01N 57/20;
A01N 37/40, A01N 25/06, A01N 25/30,
A01N 41/06, A01N 41/10, A01N 57/20;
A01N 41/06, A01N 25/06, A01N 25/30,
A01N 57/20;
A01N 41/10, A01N 25/06, A01N 25/30,
A01N 41/06, A01N 57/20;
A01N 57/20, A01N 25/06, A01N 25/30**

**Description**

FIELD OF THE INVENTION

The present invention primarily relates to kits for preparing herbicidal application mixtures (agronomic application mixtures, application compositions) comprising or consisting of two physically separate compositions in the form of Component A and Component B as defined herein. The present invention further relates to a method for producing application mixtures using said kit. Further, the present invention relates to certain compositions suitable as Components B useful as part of kits of the present invention. Also, the present invention also relates to the use of the kits of the present invention for controlling undesired vegetation and to corresponding methods.

BACKGROUND OF THE INVENTION

Maximizing loading of active ingredients in herbicidal compositions is highly desirable for minimizing cost and storage-needs, as well as for ease of herbicide (herbicidal active ingredient) application. Controlling offsite movement (migration) of herbicidal actives is a critical need for ensuring targeted or optimal herbicide application. Two potential causes for offsite movement are volatilization of any volatile actives and undesired drift of spray droplets during herbicide application by spraying. Herbicidal compositions, therefore, may contain adjuvants for controlling offsite movement of actives, referred to also as control-agents. For achieving maximal control, the loading of control-agents must be sufficiently high, which in turn, however, can greatly reduce the loading of herbicidal actives.

Herbicide offsite movement is often associated with certain herbicides. Herbicide offsite movement can occur primarily by physical movement or drift of small particles in the spray, contamination of the sprayer, and volatility of the herbicide after application. Volatile herbicides can, under certain application conditions, vaporize into the surrounding atmosphere and migrate from the application site to adjacent crop plants, such as soybeans, corn or cotton, where contact damage to sensitive plants can occur. Offsite movement can be attributed to both volatility and the physical movement of small particles from the target site to adjacent crop plants.

To address drift issues, drift reduction agents (DRAs) (also known in the art as drift reducing agents, drift retardant agents, drift retarding agents or drift control agents, herein referred to as drift retarding agents) can be included in herbicidal compositions. DRAs for herbicidal sprays can work by modifying the size distribution of particles formed by the nozzle. The first type of DRA are polymers, which can increase the extensional viscosity of the spray mixture. These polymers, so far largely limited in commercial practice to polyacrylamides, polyethylene oxide, and guar gum, can shift the spray particle size distribution to larger diameters and be effective in reducing driftable fines for some nozzles. The second type of DRA is known as "oil-type" or "emulsion-type" DRA. As the name suggests, an oil-type DRA, largely immiscible with water, can be included in a tank-mix as an emulsion or microemulsion. DRAs of this type are available commercially as additives to a spray tank. These oil-type or emulsion-type DRAs can be effective at the suppression of driftable fines and work well in a wide variety of nozzles.

Volatility control agents and drift reduction agents are known in the art.

Herbicidal compositions with a relatively high loading of actives are generally referred to as herbicidal concentrates. The concentrates typically get diluted with water in a suitable vessel, for example, a tank, and it is this diluted application mixture that gets disseminated across farmland by common agronomic application methods, often by spraying. A method known in the art for meeting the opposing needs of high active loading and maximal control of offsite movement is tank-mixing of adjuvants. In this method, an herbicidal concentrate and adjuvants such as the control-agents for controlling offsite movement, are added separately to a mixing tank and mixed together with water as diluent, thus providing an application mixture. However, a potential risk with the tank-mixing approach is exclusion of the adjuvants due to human error, resulting in herbicide application without any control of offsite movement.

A critical need for herbicide application is spontaneous miscibility of an herbicidal composition with water to produce a homogeneous application mixture, met easily, for example, by aqueous herbicidal concentrates. However, since oil is inherently immiscible with water, oil-based herbicidal compositions invariably contain emulsifying surfactant(s) for effecting miscibility of these compositions with water. Examples of oil-based herbicidal compositions include oil solution, oil-continuous suspension, oil-continuous emulsion, and mixtures thereof, comprising an oil phase or an oil-continuous phase. The oil phase or the oil-continuous phase comprises an oily liquid that is substantially immiscible with water.These compositions can be any of what is referred to in the art as Emulsifiable Concentrate, Oil-solution, Oil-continuous Microemulsion, and Oil Dispersion. The emulsifying surfactants enable emulsification of these compositions in water, thereby producing oil-in-water emulsion-based, homogeneous application mixtures.

WO 2014/071374 discloses low volatility herbicidal compositions comprising at least one auxin herbicide and at least one monocarboxylic acid or monocarboxylate thereof. This document *inter alia* describes a combination package comprising a first container comprising dicamba or an agriculturally acceptable salt thereof, and a second container comprising acetic acid, or an agriculturally acceptable salt thereof.

Various documents disclose (compositions comprising) drift control agents, for example WO 2013/189773, WO 2014/139975, WO 2015/091617, WO 2017/197066, WO 2019/094684 or WO 2021/043642.

In view of the disadvantages and challenges described above, there remains a need for effective strategies to minimize the potential risk with the tank-mixing approach of oil-based herbicidal compositions of omitting or exclusion of the offsite movement adjuvants due to human error, resulting in herbicide application without any control of offsite movement. The present invention discloses means for reducing this risk with the tank-mixing approach and are beneficial for avoiding or reducing mixing errors when preparing the application mixture in the field.

SUMMARY OF THE INVENTION

Various kits are provided for preparing an agronomic application mixture comprising or consisting of two physically separate compositions in the form of Component A and Component B, wherein

Component A is a composition substantially immiscible with water at 20°C and comprises or consists of constituent a1) one or more herbicidal active ingredients having a solubility in deionized water at a pH of 7 at 20°C of 25 g or less per 1000 g of water,
and
Component B is a composition comprising or consisting of

constituent b1) one or more offsite movement controlling agents for herbicidal active ingredients, and
constituent b2) one or more amphiphilic compounds wherein the hydrophilic-lipophilic balance (HLB) value of the amphiphilic compound or the mixture of amphiphilic compounds is equal to or greater than 6.

Also provided are methods for producing an application mixture by mixing Component A, Component B of a kit of the present invention with water.

Further provided are methods for controlling undesired vegetation, the method comprising applying to the field an application mixture obtained from a kit of the present invention.

Also provided are uses of the kits of the present invention for producing an application mixture and for controlling undesired vegetation.

The present invention also provides certain compositions suitable to be used as Component B as defined in the context of the present invention, comprising

constituent b1) one or more drift retarding agents (DRAs) selected from the group consisting of aliphatic hydrocarbons and aromatic hydrocarbons,
constituent b2) one or more emulsifying surfactants having a hydrophilic-lipophilic balance (HLB) value of equal to or greater than 6, and at least one constituent selected from the group consisting of volatility control agents and pH-buffering agents.

The Component A composition is necessarily free of the emulsifying surfactant(s) that could be effective in emulsifying the said composition in water as an oil-in-water emulsion for a viable application mixture. For any given Component A composition, the Component B composition is necessarily such that it is suitably-paired for the Component A composition. Suitability in pairing a Component B composition to a given Component A composition for an agronomic application composition is based on fulfilling a requirement comprising: the suitably-paired Component B composition necessarily comprises an emulsifying surfactant suitable for adequate emulsification of the correspondingly paired Component A composition in water as an oil-in-water emulsion. By adequate emulsification is meant the resulting oil-in-water emulsion is stable against rapid separation of oil phase from water phase. The Component B composition further necessarily comprises an offsite movement control agent, and optionally further constituents.
The benefits provided by the present invention include:

- High loading of herbicidal active(s) in herbicidal compositions, yet while providing for a control of offsite movement of said herbicidal active(s),
- Ensuring compliance in controlling offsite movement of herbicidal active(s) even when the control is implemented through tank-mixing of control-agent(s),
- Flexibility in dosing of control-agent(s), with clear prospects of providing very high dosing, if required,
- Formulation flexibility of combining various types of control-agent(s) in mixtures.

Other objects and features of the present invention will be described hereinafter.

DETAILED DESCRIPTION OF THE INVENTION

The present invention relates to various kits for preparing an agronomic (spray) application mixture comprising or consisting of two physically separate compositions in the form of Component A and Component B achieving a targeted benefit in herbicide application such as controlling offsite movement of herbicidal actives, requiring tank-mixing of control-agents and herbicidal concentrates, the said method eliminating the risk of exclusion of control-agents due to human error at the time of tank-mixing The Component A herbicidal concentrate composition of the kit according to the present invention typically is an oily or oil-based herbicidal composition, comprising one or more herbicides. Obtaining a homogeneous application mixture from water and Component A alone is not possible.

A distinguishing feature of the Component A composition over the oil-based herbicidal compositions of the prior art is that the Component A composition is necessarily free of any emulsifying surfactant(s) that could be effective in emulsifying the said composition in water as a stable oil-in-water emulsion. In contrast, the oil-based herbicidal compositions of the prior art invariably contain emulsifying surfactants that are effective in emulsifying the respective herbicidal compositions in water for producing a viable application mixture comprising a stable oil-in-water emulsion.

Thus, Component A is a composition which is immiscible with water which separates out rapidly from the water phase when mixed with water, and therefore not suitable to obtain an agronomic (spray) application mixture, and cannot be applied to farmland, without prior tank-mixing with Component B. The application composition comprises a Component A composition and a Component B composition, each provided separately from the other, to be tank-mixed with water at the time of herbicide application to form of an agronomic (spray) application mixture.

Since the composition of Component A is not amenable to producing a viable (spray) application mixture until it is tank-mixed with the Component B comprising the emulsifying and the control-agents, Component A is formulated as a herbicidal concentrate which is necessarily immiscible with water. Component B renders Component A miscible with water upon tank-mixing of the two components, and Component B comprises a control-agent. The resulting (spray) application mixture composition is necessarily such that it invariably contains the control-agent(s) from Component B required for controlling offsite movement of the herbicidal active(s) from Component A. For any given composition of Component A, the composition of Component B is necessarily such that it is suitable to produce an agronomic (spray) application mixture when combined with water and Component A. Component B further comprises the control-agent(s) for controlling offsite movement of herbicidal active(s). Component B comprises emulsifying surfactant(s) suitable and necessary for emulsifying the Component A composition in water to produce a substantially stable oil-in-water emulsion, upon tank-mixing at the time of herbicide application. Controlling offsite movement of the herbicide(s) of Component A is achieved since Component B comprises the necessary control-agent(s). Any possibility of exclusion of the control-agent(s) at the time of tank-mixing is thus eliminated.

More specifically, the foregoing kit comprising a Component A and a Component B provided as separate compositions to be combined preferably at predetermined proportions when tank-mixing, together with an amount of water, at the time of herbicide application to produce a viable application mixture.

In a first aspect, the present invention relates to a kit for preparing an agronomic (spray) application mixture comprising or consisting of two physically separate compositions in the form of Component A and Component B, wherein

> Component A is a composition substantially immiscible with water at 20°C and comprises or consists of
> constituent a1) one or more herbicidal active ingredients having a solubility in deionized water at a pH of 7 at 20°C of 25 g or less, preferably of 20 g or less, more preferably of 16 g or less, more preferably 10 g or less, per 1000 g of water,
> and
> Component B is a composition comprising or consisting of
>
> > constituent b1) one or more offsite migration controlling agents for herbicidal active ingredients, and
> > constituent b2) one or more amphiphilic compounds wherein the hydrophilic-lipophilic balance (HLB) value of the amphiphilic compound or the mixture of amphiphilic compounds is equal to or greater than 6, preferably in the range of from about 7 to about 18, more preferably in the range of from about 8 to about 15, wherein constituent b2) is different from constituent b1),

wherein constituents b1) and b2) each are different from constituent a1) of Component A.

A kit (also referred to as kit-of-parts) in the context of the present invention is the offering of two or more compositions in a kit that the end user - typically a farmer or farm worker - mixes or combines (shortly) before (e.g. a tank-mix) or at the time of use (e.g. by direct injection spray application). A kit (kit-of-parts) often is in the form of a co-pack, a bundle or a combination-package, in each case comprising the physically separate Components A and B as defined in the context of the present invention. A kit described in the context of the present invention is suitable and has the aim to result, after the addition of an appropriate amount of water and mixing, in a homogenous ready-to-use diluted

spray application mixture, known in the art as tank-mix.

Component A and Component B in the context of the present invention have to be compatible and suitably adapted such that a homogenous ready-to-use diluted spray application mixture (tank-mix) is obtained by mixing Components A and B with water, i.e. the one or more emulsifying surfactants of Component B are capable of adequately emulsifying Component A in water.

A kit according to the present invention allows to produce a homogeneous aqueous herbicide application mixture that can be applied to farmland using common agronomic application methods, such as spraying, upon tank-mixing the two Components A and B provided separately from each other until they are tank-mixed together with a suitable amount of water to form the agronomic (spray) application mixture (the application composition) at the time of herbicide application.

A kit according to the present invention allows to produce a homogeneous aqueous herbicide application mixture as an oil-in-water emulsion that is substantially stable against rapid separation of oil phase from water phase, also having the benefit of controlling offsite movement of the herbicidal active(s) contained in the aqueous herbicide application mixture.

As used herein, the phrase "substantially immiscible" (in case of fluids) or "substantially insoluble" (in case of solids) refers to the miscibility or solubility of one component in another liquid component that is 5.0 wt.% or less, preferably 2.5 wt.% or less, more preferably 1.5 wt.% or less, even more preferably 1.0 wt.% or less, or even 0.5 wt.% or less, in each case when measured at room temperature (20°C) and 1013 mbar.

The terms "liquid", "fluid", "flowable" as used herein refer to a material having pourable or pumpable consistency at 25°C, more specifically, having a Brookfield viscosity at 25°C of less than about 2000 cps, preferably of less than about 1500 cps, more preferably of less than about 1000 cps, in each case with the viscosity measured at 20 rpm of spindle-speed (Brookfield viscometer LV).

For example, when a component is "substantially immiscible with water" this means that said component meets the (preferred or more preferred) criteria in water mentioned above and when said component is mixed with water under agitation, said component separates out of the resulting mixture as a separated phase shortly after the agitation is stopped.

Both low aqueous solubility and lack of self-emulsifying ability are needed for Component A, i.e. an aqueous solubility in deionized water at a pH of 7 at 20°C indicated above, and being substantially immiscible with water.

The HLB value of emulsifying surfactant or surfactant mixture is substantially close to the hydrophilic-lipophilic balance (HLB) value that is required for substantially stable emulsification of Component A in water as oil-in-water emulsion. By substantially close is meant within a maximum of 2 units of difference from the required HLB value - for example, 10 - 14, when the required value is 12. This is mentioned to emphasize that not any Component B would be suitable for a given Component A.

An experimental method for determining the HLB value of an unknown surfactant, e.g. suitable to be used as part of Component B, is provided hereinafter according to the Griffin method (see General Procedure G1 below), which is the conventional method used in the art. Although the Griffin equation/method was originally developed for some specific types of non-ionic surfactants, but later extended to anionic and cationic surfactants as well.

An experimental method for determining the HLB-requirement for a given oil-phase is provided hereinafter (see General Procedure G2 below).

**Component A**

According to various embodiments, the Component A composition preferably exhibits both physical and chemical stability over a wide temperature range, for example, in the range of from about -20°C to about 35°C, more preferably in the range of from about -20°C to about 40°C, and often in the range of from about -20°C to about 54°C.

According to preferred embodiments, the Component A composition has a pourable or pumpable consistency at 25°C, typically having a Brookfield viscosity at 25°C of less than about 2000 cps, preferably of less than about 1500 cps, more preferably of less than about 1000 cps, in each case with the viscosity measured at 20 rpm of spindle-speed (Brookfield viscometer LV).

Component A of a kit according to the present invention preferably is liquid (fluid) at 25°C and 1013 mbar (as defined above).

Preferably, the amount of constituent a1) in Component A is in the range of from about 15 wt.% to about 99 wt.%, preferably in the range of from about 15 wt.% to about 97 wt.%, in each case based on the total weight of Component A.

Preferably, the amount of constituent a1) in Component A is in the range of from about 20 wt.% to about 97 wt.%, preferably in the range of from about 20 wt.% to about 95 wt.%, more preferably in the range of from about 25 wt.% to about 95 wt.%, in each case based on the total weight of Component A.

Component A of a kit according to the present invention preferably is in the form of an oil solution, an oil-continuous dispersion, and mixtures thereof.

Component A of a kit according to the present invention typically comprises or consists of one or more herbicidal

active ingredients, wherein at least one herbicidal active ingredient is preferably selected from the group consisting acetyl CoA carboxylase (ACCase) inhibitors, enolpyruvyl shikimate-3-phosphate synthase (EPSPS) inhibitors, glutamine synthetase inhibitors, auxins, photosystem I (PS I) inhibitors, photosystem II (PS II) inhibitors, acetolactate synthase (ALS) or acetohydroxy acid synthase (AHAS) inhibitors, 4-hydroxyphenylpyruvate dioxygenase (HPPD) inhibitors, protoporphyrinogen oxidase (PPO) inhibitors, cellulose inhibitors, mitosis inhibitors, oxidative phosphorylation uncouplers, dihydropteroate synthase inhibitors, fatty acid and lipid biosynthesis inhibitors, auxin transport inhibitors and carotenoid biosynthesis inhibitors, salts and esters thereof, racemic mixtures and resolved isomers thereof, and mixtures thereof.

The agrochemical active compounds (including the herbicidal active ingredients and the safeners) referred to in the context of the present invention are known *per se,* and described *inter alia* in "The Pesticide Manual", 16th edition, The British Crop Protection Council and the Royal Soc. of Chemistry, 2012 and the literature cited therein.

Herbicides suitable to be used in the context of the present invention, in particular present in a kit according to the present invention, are, for example, acetochlor, acifluorfen, acifluorfen-sodium, aclonifen, alachlor, allidochlor, alloxydim, alloxydim-sodium, ametryn, amicarbazone, amidochlor, amidosulfuron, aminocyclopyrachlor, aminocyclopyrachlor-potassium, aminocyclopyrachlor-methyl, aminopyralid, amitrole, ammoniumsulfamate, anilofos, asulam, atrazine, azafenidin, azimsulfuron, beflubutamid, benazolin, benazolin-ethyl, benfluralin, benfuresate, bensulfuron, bensulfuron-methyl, bensulide, bentazone, benzobicyclon, benzofenap, bicyclopyron, bifenox, bilanafos, bilanafos-sodium, bispyribac, bispyribac-sodium, bixlozone, bromacil, bromobutide, bromofenoxim, bromoxynil, bromoxynil-butyrate, -potassium, -heptanoate und -octanoate, busoxinone, butachlor, butafenacil, butamifos, butenachlor, butralin, butroxydim, butylate, cafenstrole, carbetamide, carfentrazone, carfentrazone-ethyl, chloramben, chlorbromuron, chlorfenac, chlorfenac-sodium, chlorfenprop, chlorflurenol, chlorflurenol-methyl, chloridazon, chlorimuron, chlorimuron-ethyl, chlorophthalim, chlorotoluron, chlorthal-dimethyl, chlorsulfuron, 3-[5-chlor-4-(trifluormethyl)pyridin-2-yl]-4-hydroxy-1-methylimidazolidin-2-one, cinidon, cinidon-ethyl, cinmethylin, cinosulfuron, clacyfos, clethodim, clodinafop, clodinafop-propargyl, clomazone, clomeprop, clopyralid, cloransulam, cloransulam-methyl, cumyluron, cyanamide, cyanazine, cycloate, cyclopyranil, cyclopyrimorate, cyclosulfamuron, cycloxydim, cyhalofop, cyhalofop-butyl, cyprazine, 2,4-D (i.e. (2,4-dichlorophenoxy)acetic acid), 2,4-D-butotyl, -butyl, -dimethylammonium, -diolamin, -ethyl, 2-ethylhexyl, -isobutyl, -isooctyl, -isopropylammonium, -potassium, -triisopropanolammonium and - trolamine, 2,4-DB (i.e. 4-(2,4-dichlorophenoxy)butanoic acid), 2,4-DB-butyl, -dimethylammonium, isooctyl, -potassium and -sodium, daimuron (dymron), dalapon, dazomet, n-decanol, desmedipham, detosyl-pyrazolate (DTP), dicamba, dichlobenil, 2-(2,4-dichlorobenzyl)-4,4-dimethyl-1,2-oxazolidin-3-one, 2-(2,5-dichlorobenzyl)-4,4-dimethyl-1,2-oxazolidin-3-one, dichlorprop, dichlorprop-P, diclofop, diclofop-methyl, diclofop-P-methyl, diclosulam, difenzoquat, diflufenican, diflufenzopyr, diflufenzopyr-sodium, dimefuron, dimepiperate, dimethachlor, dimethametryn, dimethenamid, dimethenamid-P, dimetrasulfuron, dinitramine, dinoterb, diphenamid, diquat, diquat-dibromid, dithiopyr, diuron, DNOC (2-methyl-4,6-dinitrophenol), endothal, EPTC (i.e. S-ethyl dipropylcarbamothioate), epyrifenacil, esprocarb, ethalfluralin, ethametsulfuron, ethametsulfuron-methyl, ethiozin, ethofumesate, ethoxyfen, ethoxyfen-ethyl, ethoxysulfuron, etobenzanid, F-5231 (i.e. N-[2-chlor-4-fluor-5-[4-(3-fluorpropyl)-4,5-dihydro-5-oxo-1H-tetrazol-1-yl]-phenyl]-ethansulfonamide), F-7967 (i.e. 3-[7-chlor-5-fluor-2-(trifluormethyl)-1H-benzimidazol-4-yl]-1-methyl-6-(trifluormethyl)pyrimidin-2,4(1H,3H)-dione), fenoxaprop, fenoxaprop-P, fenoxaprop-ethyl, fenoxaprop-P-ethyl, fenoxasulfone, fenquinotrione, fentrazamide, flamprop, flamprop-M-isopropyl, flamprop-M-methyl, flazasulfuron, florasulam, florpyrauxifen, florpyrauxifen-benzyl, fluazifop, fluazifop-P, fluazifop-butyl, fluazifop-P-butyl, flucarbazone, flucarbazone-sodium, flucetosulfuron, fluchloralin, flufenacet, flufenpyr, flufenpyr-ethyl, flumetsulam, flumiclorac, flumiclorac-pentyl, flumioxazin, fluometuron, flurenol, flurenol-butyl, - dimethylammonium and -methyl, fluoroglycofen, fluoroglycofen-ethyl, flupropanate, flupyrsulfuron, flupyrsulfuron-methyl-sodium, fluridone, flurochloridone, fluroxypyr, fluroxypyr-meptyl, flurtamone, fluthiacet, fluthiacet-methyl, fomesafen, fomesafen-sodium, foramsulfuron, fosamine, glufosinate, glufosinate-ammonium, glufosinate-P-sodium, glufosinate-P-ammonium, glufosinate-P-sodium, glyphosate, glyphosate-ammonium, -isopropylammonium, -diammonium, -dimethylammonium, - potassium, -sodium and -trimesium, H-9201 (i.e. O-(2,4-dimethyl-6-nitrophenyl)-O-ethyl-isopropylphosphoramidothioate), halauxifen, halauxifen-methyl, halosafen, halosulfuron, halosulfuron-methyl, haloxyfop, haloxyfop-P, haloxyfop-ethoxyethyl, haloxyfop-P-ethoxyethyl, haloxyfop-methyl, haloxyfop-P-methyl, hexazinone, HW-02 (i.e. 1-(dimethoxyphosphoryl)-ethyl-(2,4-dichlorphenoxy)acetate),4-hydroxy-1-methoxy-5-methyl-3-[4-(trifluormethyl)pyridin-2-yl]imidazolidin-2-on, 4-hydroxy-l-methyl-3-[4-(trifluormethyl)pyridin-2-yl]imidazolidin-2-one, imazamethabenz, imazamethabenz-methyl, imazamox, imazamox-ammonium, imazapic, imazapic-ammonium, imazapyr, imazapyr-isopropylammonium, imazaquin, imazaquin-ammonium, imazethapyr, imazethapyr-immonium, imazosulfuron, indanofan, indaziflam, iodosulfuron, , iodosulfuron-methyl, iodosulfuron-methyl-sodium, ioxynil, ioxynil-octanoate, -potassium and sodium, ipfencarbazone, isoproturon, isouron, isoxaben, isoxaflutole, karbutilate, KUH-043 (i.e. 3-({[5-(difluormethyl)-1-methyl-3-(trifluormethyl)-1H-pyrazol-4-yl]methyl}sulfonyl)-5,5-dimethyl-4,5-dihydro-1,2-oxazole), ketospiradox, lactofen, lenacil, linuron, MCPA (i.e. (4-chloro-2-methylphenoxy)acetic acid), MCPA-butotyl, -dimethylammonium, -2-ethylhexyl, -isopropylammonium, -potassium and -sodium, MCPB (i.e. 4-(4-chloro-2-methylphenoxy)butanoic acid), MCPB-methyl, -ethyl and -sodium, mecoprop, mecoprop-sodium, and - butotyl, mecoprop-P, mecoprop-P-butotyl, -dimethylammonium, -2-ethylhexyl and -potassium, mefenacet, mefluidide, mesosulfuron, mesosulfuron-methyl, mesotrione, methabenzthiazuron, metam, metamifop, metamitron, metazachlor, metazosulfuron, methabenzthiazuron, methiopyrsulfuron, methiozolin, methyl isothiocyanate, metobromuron, metolachlor, S-metolachlor, metosulam, metoxuron, metribuzin, metsulfuron, metsulfuron-methyl, molinat, monolinuron, monosulfuron, monosulfuron-ester, MT-5950 (i.e. N-[3-chlor-4-(1-methylethyl)-phenyl]-2-methylpentanamide), NGGC-011, napropamide, NC-310 (i.e. 4-(2,4-dichlorbenzoyl)-1-methyl-5-benzyloxypyrazole), neburon, nicosulfuron, nonanoic acid (pelargonic acid), norflurazon, oleic acid (fatty acids), orbencarb, orthosulfamuron, oryzalin, oxadiargyl, oxadiazon, oxasulfuron, oxaziclomefon, oxotrione (lancotrione), oxyfluorfen, paraquat, paraquat dichloride, pebulate, pendimethalin, penoxsulam, pentachlorphenol, pentoxazone, pethoxamid, phenmedipham, picloram, picolinafen, pinoxaden, piperophos, pretilachlor, primisulfuron, primisulfuron-methyl, prodiamine, profoxydim, prometon, prometryn, propachlor, propanil, propaquizafop, propazine, propham, propisochlor, propoxycarbazone, propoxycarbazone-sodium, propyrisulfuron, propyzamide, prosulfocarb, prosulfuron, pyraclonil, pyraflufen, pyraflufen-ethyl, pyrasulfotole, pyrazolynate (pyrazolate), pyrazosulfuron, pyrazosulfuron-ethyl, pyrazoxyfen, pyribambenz, pyribambenz-isopropyl, pyribambenz-propyl, pyribenzoxim, pyributicarb, pyridafol, pyridate, pyriftalid, pyriminobac, pyriminobac-methyl, pyrimisulfan, pyrithiobac, pyrithiobac-sodium, pyroxasulfone, pyroxsulam, quinclorac, quinmerac, quinoclamine, quizalofop, quizalofop-ethyl, quizalofop-P, quizalofop-P-ethyl, quizalofop-P-tefuryl, rimsulfuron, saflufenacil, sethoxydim, siduron, simazine, simetryn, sulcotrione, sulfentrazone, sulfometuron, sulfometuron-methyl, sulfosulfuron, SYN-523, SYP-249 (i.e. 1-ethoxy-3-methyl-1-oxobut-3-en-2-yl-5-[2-chlor-4-(trifluormethyl)phenoxy]-2-nitrobenzoate), SYP-300 (i.e. 1-[7-fluor-3-oxo-4-(prop-2-in-1-yl)-3,4-dihydro-2H-1,4-benzoxazin-6-yl]-3-propyl-2-thioxoimidazolidin-4,5-dione), 2,3,6-TBA (i.e. 2,3,6-trichlorobenzoic acid), TCA (i.e. trichloroacetic acid), TCA-sodium, tebuthiuron, tefuryltrione, tembotrione, tepraloxydim, terbacil, terbucarb, terbumeton, terbuthylazin, terbutryn, thenylchlor, thiazopyr, thiencarbazone, thiencarbazone-methyl, thifensulfuron, thifensulfuron-methyl, thiobencarb, tiafenacil, tolpyralate, topramezone, tralkoxydim, triafamone, tri-allate, triasulfuron, triaziflam, tribenuron, tribenuron-methyl, triclopyr, trietazine, trifloxysulfuron, trifloxysulfuron-sodium, trifludimoxazin, trifluralin, triflusulfuron, triflusulfuron-methyl, tritosulfuron, urea sulfate, vernolate, and ZJ-0862 (i.e. 3,4-dichlor-N-{2-[(4,6-dimethoxypyrimidin-2-yl)oxy]benzyl}aniline), and mixtures thereof.

In various embodiments, Component A of a kit according to the present invention comprises or consists of one or more herbicidal active ingredients selected from the group consisting of auxin herbicidal active ingredients (auxin herbicides), acetamide herbicides, acetyl CoA carboxylase (ACCase) inhibitor herbicides, photosystem I (PS I) inhibitor herbicides, photosystem II (PS II) inhibitor herbicides, 4-hydroxyphenylpyruvate dioxygenase (HPPD) inhibitor herbicides, protoporphyrinogen oxidase (PPO) inhibitor herbicides, organophosphorus herbicides, and esters thereof, and mixtures thereof. Where generically reference to an herbicide of Component A of a kit according to the present invention is made to herein by name, unless otherwise restricted, that herbicide name includes all (commercially available) forms known in the art such as salts, esters, free acids and free bases, as well as stereoisomers of said herbicide.

In various embodiments constituent a1) of Component A of a kit according to the present invention comprises or consists of auxin herbicidal active ingredients selected from the group consisting of 3,6-dichloro-2-methoxybenzoic acid (dicamba), 2,4-dichlorophenoxyacetic acid (2,4-D), 4-(2,4-dichlorophenoxy)butyric acid (2,4-DB), dichloroprop, 2-methyl-4-chlorophenoxyacetic acid (MCPA), 4-(4-chloro-2-methylphenoxy)butanoic acid (MCPB), 4-chlorophenoxyacetic acid, 2,4,5-trichlorophenoxyacetic acid (2,4,5-T), aminopyralid, clopyralid, fluroxypyr, triclopyr, mecoprop, picloram, quinclorac, aminocyclopyrachlor, benazolin, halauxifen and/or fluorpyrauxifen, and esters thereof, and mixtures thereof.

In various embodiments constituent a1) of Component A of a kit according to the present invention comprises or consists of one or more acetamide herbicides selected from the group consisting of acetochlor, alachlor, butachlor, butenachlor, delachlor, diethatyl and agriculturally acceptable esters thereof, dimethachlor, dimethenamid, dimethenamid-P, mefenacet, metazachlor, metolachlor, S-metolachlor, napropamide, pretilachlor, pronamide, propachlor, propisochlor, prynachlor, terbuchlor, thenylchlor and xylachlor, preferably acetochlor, alachlor, butachlor and/or S-metolachlor, more preferably the acetamide herbicide is acetochlor.

In various embodiments constituent a1) of Component A of a kit according to the present invention comprises or consists of one or more HPPD-inhibitor herbicides selected from the group consisting of mesotrione, sulcotrione, tembotrione, topramezone, isoxachlortole, isoxaflutole, benzofenap, pyrazolynate, pyrazoxyfen and benzobicyclon, and esters thereof, and mixtures thereof.

In various embodiments constituent a1) of Component A of a kit according to the present invention comprises or consists of one or more organophosphorus herbicides selected from the group consisting of glyphosate, glufosinate and bialaphos, and salts or esters thereof.

In various embodiments constituent a1) of Component A of a kit according to the present invention further comprises one or more herbicide safeners, preferably selected from the group consisting of benoxacor, cloquintocet and agriculturally acceptable esters thereof, cyometrinil, cyprosulfamide, dichlormid, dicyclonon, dietholate, fenchlorazole and agriculturally acceptable esters thereof, fenclorim, flurazole, fluxofenim, furilazole, isoxadifen and agriculturally acceptable esters thereof, mefenpyr and agriculturally acceptable esters thereof, mephenate, metcamifen, naphthalic anhydride, oxabetrinil, and mixtures thereof, more preferably at least one herbicide safener selected from the group consisting of benoxacor, cloquintocet-methyl, cloquintocet-mexyl, cyprosulfamide, fenchlorazole-ethyl, furilazole, isoxadifen-ethyl and/or mefenpyr-diethyl.

In some embodiments, the Component A composition can comprise an oil-continuous suspension comprising an oil-insoluble, solid herbicidal active dispersed as a finely divided particulate solid in an oil-continuous phase comprising an oily liquid that is substantially immiscible with water.

In various embodiments Component A of a kit according to the present invention is in the form of an oil-continuous suspension and constituent a1) comprises or consists of one or more herbicidal active ingredients as solid particulate at 25°C and 1013 mbar, wherein said solid particulate preferably is selected from the group consisting of HPPD-inhibitor herbicides defined (as preferred) above, organophosphorus herbicides defined (as preferred) above, and mixtures thereof.

The solid particulate herbicide can, for example, comprise or consist of one or more herbicidal active ingredients selected from the group consisting of aclonifen, amitrole, beflubutamid, benzofenap, clomazone, diflufenican, fluridone, flurochloridone, flurtamone, isoxachlortole, isoxaflutole, mesotrione, norflurazon, picolinafen, pyrazolynate, pyrazoxyfen, sulcotrione, tembotrione, topramezone, tolpyralate, tefuryltrione, salts and esters thereof, and mixtures thereof. In some embodiments, the solid particulate herbicide comprises isoxaflutole, mesotrione or tembotrione.

The solid particulate herbicide can be milled using a grinding/milling equipment (e.g. ball mill) provided with a suitable grinding medium (e.g. ceramic grinding bead) to attain the desired particle size for the solid particulate herbicide. In various embodiments of these processes, the solid particulate herbicide can be milled to an average particle size that is less than about 5 micrometers (microns), less than about 2.5 microns, less than about 1 microns. When milling is performed, surfactants and/or other additives can be added after milling.

In various embodiments, constituent a1) can be selected from the group consisting of oily herbicidal active ingredient (e.g. an oil phase herbicide as described herein).

Examples of oil phase herbicides include acetamide herbicides. In general, acetamide herbicides are relatively polar, oily herbicides. Acetamide herbicides include, for example, acetochlor, alachlor, butachlor, butenachlor, carbetamide, delachlor, dethatyl, dimethachlor, dimethenamid, dimethenamid-P, mefenacet, metazochlor, metolachlor, S-metolachlor, napropamide, pretilachlor, pronamide, propachlor, propisochlor, prynachlor, terbuchlor, thenylchlor and xylachlor, esters thereof, and mixtures thereof. In some embodiments, the acetamide herbicide is selected from the group consisting of acetochlor, alachlor, metolachlor, S-metolachlor, and mixtures thereof. In certain embodiments, the acetamide herbicide comprises or consists of acetochlor.

In various embodiments the amount of constituent a1) of Component A of a kit according to the present invention is in the range of from about 15 wt.% to about 70 wt.%, preferably in the range of from about 20 wt.% to about 70 wt.%, more preferably in the range of from about 20 wt.% to about 65 wt.%, even more preferably in the range of from about 25 wt.% to about 60 wt.%, most preferably in the range of from about 30 wt.% to about 50 wt.%, in each case based on the total weight of Component A.

In preferred embodiments, Component A of a kit according to the present invention further comprises a constituent a2) one or more oily substances, wherein constituent a2) is different from constituent a1). The oily substances of constituent a2) are flowable at 25°C and 1013 mbar (as defined above) and substantially immiscible with water, preferably having a solubility in deionized water at a pH of 7 at 20°C of 25 g or less, typically 20 g or less, preferably 16 g or less, more preferably 10 g or less, per 1000 g of water.

The amount of constituent a1) in Component A of a kit according to the present invention typically is in the range of from about 5 wt.% to about 90 wt.%, preferably in the range of from about 10 wt.% to about 90 wt.%, more preferably in the range of from about 20 wt.% to about 90 wt.%, even more preferably in the range of from about 25 wt.% to about 90 wt.%, in each case based on the total weight of Component A.

In preferred embodiments, Component A of a kit according to the present invention is in the form of an oil solution and constituent a1) comprises or consists of one or more herbicidal active ingredients selected from the group consisting of oil-soluble herbicidal active ingredients, preferably selected from the group consisting of the auxin herbicidal active ingredients defined (as preferred) above and the acetamide herbicides defined (as preferred) above.

Oil-soluble herbicidal active ingredients in the context of the present invention preferably have a solubility of 5 wt.% or more in the oily substance(s) of Component A when measured at 20°C and 1013 mbar.

Preferably, the total amount of constituent a2) in Component A of a kit according to the present invention is in the range of from about 1 wt.% to about 95 wt.%, preferably in the range of from about 5 wt.% to about 80 wt.%, more preferably in the range of from about 10 wt.% to about 70 wt.%, even more preferably in the range of from about 20 wt.% to about 60 wt.%, in each case based on the total weight of Component A.

Also encompassed herein are oil-continuous suspensions of milled solid herbicidal active ingredients (e.g. mesotrione or tembotrione), where the oil-continuous phase is silicone oil, and where this oil-continuous suspension is emulsified in an oil phase that is substantially immiscible with silicone oil, comprising mixtures of triglycerides (e.g. castor oil), acetochlor, and optionally one or more aliphatic hydrocarbons (alkanes and/or cycloalkanes, mineral oil).

In preferred embodiments, if present, constituent a2) of Component A of a kit according to the present invention comprises or consist of one or more oily substances selected from the group consisting of triglycerides, aliphatic hydrocarbons (alkanes and/or cycloalkanes, mineral oils), silicone oils, fatty alcohols, fatty esters, fatty amides, fatty aldehydes,

fatty ketones, aromatic solvents, chlorinated solvents, and mixtures thereof.

Examples of suitable constituent a2) of Component A of a kit according to the present invention are hydrocarbon liquids such as paraffinic and aliphatic hydrocarbon solvents (e.g. solvents comprising $C_5$-$C_{25}$ branched and/or linear alkanes or $C_{10}$-$C_{20}$ branched alkanes). Paraffinic and aliphatic hydrocarbon liquids include normal paraffin oil (e.g. NORPAR 15, available from ExxonMobil); isoparaffin oils (e.g. ISOPAR V, ISOPAR L, and ISOPAR M, also available from ExxonMobil); mineral oils; and aliphatic fluids or oils (e.g. EXXSOL D110 and EXXSOL D130, available from ExxonMobil). Other oily substances suitable as (part of) constituent a2) of Component A of a kit according to the present invention are liquid ester oils with a carbon atom-content of at least 12 (e.g. isopropyl myristate), triglycerides (e.g. vegetable oils), and silicone oils (e.g. oils of relatively high molecular weight dimethicone).

The term "fatty" used in the context of the present invention refers to hydrocarbon chains with $C_8$-$C_{30}$ carbon atoms, in particular to $C_{12}$-$C_{18}$ carbon atoms.

In several embodiments of the present invention, preference is given to constituents a2) of Component A comprising or consisting of triglycerides, in particular vegetable oils such as or castor oil. For example, castor oil was found to be particularly suitable as (part of) constituent a2) in case auxin herbicides such as dicamba acid are incorporated into Component A.

While only some (types of) oils function as a suitable solvent for dicamba acid, and out of these dicamba acid-solvent oils, some can function as high-affinity solvent (being more effective concerning offsite migration) due to affinity-imparting structural elements, for example, hydrogen-bonding groups, double-bonds, aromatic ring, as well as molecular weight. The high-affinity solvent for auxin herbicides can be selected from the group consisting of polyol, triglyceride, aromatic solvent, and mixtures thereof. Nonlimiting examples of such high-affinity solvent include propylene glycol, hexylene glycol, castor oil, acetochlor, and Aromatic 200. Aromatic 200 [Solvent Naphtha (petroleum), Heavy Aromatic], is a complex mixture of aromatic hydrocarbons, the main components thereof are aromatic hydrocarbons (C10-C16), the total amount of aromatic hydrocarbons being >99 wt.-%. Hence, Component A can contain oils which may function as oily DRAs and high-affinity solvent (e.g. castor oil) for dicamba acid as offsite migration control agent, but the amount of such control agent(s), if present, in Component A is too low or insufficient for offsite migration control, so that the loading of the herbicidal active ingredient(s) in Component A can be as high as possible. Offsite migration control is one of the features or functions of Component B in the kits according to the present invention.

In various embodiments, Component A of a kit according to the present invention further comprises constituent a3), wherein constituent a3) comprises or consists of one or more substances selected from the group consisting of constituents a3-1) to a3-4):

a3-1) organic solvents different from constituents a1) and a2),
a3-2) organic polymers and surfactants having a hydrophilic-lipophilic balance (HLB) value of lower than 6 as dispersing agents different from constituents a1), a2) and a3-1),
a3-3) rheology modifiers different from constituents a1), a2), a3-1) and a3-2), and
a3-4) polymeric drift retarding agents having a molecular weight of 100000 Dalton (Da) or more different from constituents a1), a2), a3-1), a3-2) and a3-3).

In the context of the present invention, references to the molecular weight of a polymeric substance, in particular to polymeric drift retarding agents, refer to the mean average molecular weight (Mw).

The term "fatty" used in the context of the present invention refers to Preferably, the one or more substances of constituent a3), if present, are present in Component A of a kit according to the present invention in the following amounts:

constituent a3-1) in the amount of from about 0.1 wt.% to about 25 wt.%,
constituent a3-2) in the total amount of from about 0.1 wt.% to about 20 wt.%,
constituent a3-3) in the amount of from about 0.1 wt.% to about 10 wt.%,
and/or
constituent a3-4) in the amount of from about 0.1 wt.% to about 10 wt.%, preferably from about 0.1 wt.% to about 5 wt.%, more preferably, from about 0.1 wt.% to about 3 wt.%,

wherein the amounts in each case are based on the total weight of Component A.

Component A of a kit according to the present invention can comprise organic polymers and surfactants having a hydrophilic-lipophilic balance (HLB) value of lower than 6 as dispersing agents (constituent a3-2)). Component A of a kit according to the present invention may comprise a dispersed phase, generally in the form of either suspended solid phase particles or emulsified oil-containing droplets. To maintain stability, these dispersed phases require a strong and long-range repulsive force acting between them. A polymeric dispersing agent is suitable for providing or enhancing such inter-particle repulsive force. Accordingly, in various embodiments, Component A of a kit according to the present

invention may further comprise a polymeric dispersing agent.

Typically, the dispersing agents have a HLB (hydrophilic-lipophilic balance) value of less than about 6. Polymeric dispersing agents include, for example, block or graft copolymers comprising a co-monomer that is nominally insoluble and a second co-monomer that is highly soluble in the oil continuous phase. In some embodiments, the polymeric dispersing agent comprises a tri-block copolymer having a molecular structure that can be represented as A-B-A block copolymer, wherein "A" represents the soluble co-monomer and "B" represents the nominally insoluble co-monomer.

In certain embodiments, the polymeric dispersing agent of constituent a3-2) of Component A of a kit according to the present invention comprises at least one polymer selected from the group consisting of PEG-30 dipolyhydroxystearate, polyglyceryl-2 dipolyhydroxystearate, PEG-polyethylene block copolymer, PEG-polystyrene block copolymer, PEG-3 pimethicone, PEG-9 methyl ether dimethicone, PEG-10 dimethicone, PEG-9 polydimethylsiloxyethyl dimethicone, lauryl PEG-9 polydimethylsiloxyethyl dimethicone, polyglyceryl-3 polydimethylsiloxyethyl dimethicone, lauryl polyglyceryl-3 polydimethylsiloxyethyl dimethicone, polyglyceryl-3 polydimethylsiloxyethyl dimethicone, polyglyceryl-3 disiloxane dimethicone, acrylates/ethylhexyl acrylate/dimethicone methacrylate, polyglyceryl-3 lauryl polydimethylsiloxyethyl dimethicone crosspolymer, PEG-15 lauryl polydimethylsiloxyethyl dimethicone crosspolymer, PEG-15/lauryl dimethicone crosspolymer, dimethicone/PEG-10/15 crosspolymer, dimethicone/polyglyceryl-3 crosspolymer, lauryl dimethicone/polyglyceryl-3 crosspolymer, trimethylsiloxysilicate, and mixtures thereof. In some embodiments, the dispersing agent comprises PEG 30-dipolyhydroxystearate (CAS Number: 827596-80-5).

Component A of a kit according to the present invention can comprise a rheology modifier (constituent a3-3)). Generally, rheology-modifiers minimize sedimentation of the dispersed phases. Typically, suitable rheology modifiers are effective over a temperature range of from about -20°C to about 54°C. Rheology modifiers include, for example, particulate rheology modifiers and polymeric rheology modifiers. In some embodiments, particulate rheology modifiers are selected from the group consisting of smectite clays (e.g. organoclays), silica, paraffinic and natural waxes, crystalline cellulose, and mixtures thereof.

Suitable polymeric rheology-modifiers of constituent a3-3) are oil-soluble polymers, preferably having a solubility in the mixture of the liquid constituent(s) present in Component A of 5% by weight or higher at 20°C and 1013 mbar, and include, for example, polyamide polymers, available from Croda Inc. and polyethylene. Other suitable polymeric rheology-modifiers include various oil-soluble, hydrophobic cross-polymers. In some embodiments, the polymeric rheology-modifiers are selected from the group consisting of dimethicone/vinyl dimethicone crosspolymer, dimethicone/phenyl vinyl dimethicone crosspolymer, dimethicone/lauryl dimethicone crosspolymer, and lauryl polydimethylsiloxyethyl dimethicone/bis-vinyl dimethicone crosspolymer, and mixtures thereof. Mixtures of particulate and polymeric rheology-modifiers can also be used.

A particulate rheology-modifier of constituent a3-3) can be in a surface-modified form, wherein the surface-modifier is selected from the group consisting of a $C_{12}$-$C_{18}$ alkyl or aryl quaternary ammonium compound, a polymer, and mixtures thereof. The rheology modifier is preferably capable of providing for high yield stress and highly shear-thinning rheology, wherein even a gelled oil dispersion, upon agitation or shearing, shows thinning or viscosity-reduction to the point where it can be poured or pumped easily and/or diluted for end-application. In various embodiments, the rheology modifier comprises a surface-modified smectite clay. In certain embodiments, the surface-modified smectite clay has a plurality of surface-modifications imparted by a combination of surface-modifying surfactants at least one of which is a polymeric surfactant having a molecular weight of greater than 2000 Dalton. In some embodiments, the rheology modifier is a surface-modified smectite clay is milled to a smaller particle size for increasing the yield-stress and shear-thinning properties of the said clay.

Also, the rheology modifier can have an average particle size that is less than about 5 microns, less than about 2.5 microns, less than about 1 microns, less than about 0.5 microns, or less than about 0.1 microns. In some embodiments, the rheology modifier is milled to an average particle size that is less than about 5 microns, less than about 2.5 microns, less than about 1 microns, less than about 0.5 microns, or less than about 0.1 microns.

Component A of a kit according to the present invention can comprise one or more polymeric drift retarding agents having a molecular weight of 100000 Dalton or more (constituent a3-4)).

Preferably, the one or more substances of constituent a3), if present, of Component A of a kit according to the present invention are selected from the group consisting of

constituent a3-1) is selected from $C_2$-$C_8$ alkylene glycols (preferably propylene glycol and/or hexylene glycol, dipropylene glycol, 1,3-propanediol, 1,4-butanediol, 1,3-butanediol), $C_2$-$C_8$ alkylene glycol alkyl ether (preferably propylene glycol methyl ether), $C_2$-$C_8$ alkylene carbonates (preferably propylene carbonate), and mixtures thereof,

constituent a3-2) is selected from block or graft copolymers having a comonomer that is substantially insoluble in oils, preferably Polyglyceryl esters, PEG-30 Dipolyhydroxystearate, Acrylates/Ethylhexyl Acrylate/Dimethicone Methacrylate copolymer, and Acrylates/Dimethicone copolymer, Dimethicone Copolyol, and mixtures thereof,

constituent a3-3) is selected from organo-modified clays (preferably organo-modified smectite), silica, silicone elastomers, high molecular weight polymers having a molecular weight of at least 500000 Da, cross-linked polymers,

block copolymers, wherein said polymers have a solubility in the (mixture of the) liquid constituent(s) present in Component A of 5% by weight or higher at 20°C and 1013 mbar, and mixtures thereof,
and
constituent a3-4) is selected from polysaccharides, polyacrylamides, polyethylene oxides, polysulfonates, polysulfates, polyvinylpyrrolidones, polyvinyl alcohols, polyacrylates, polymers and copolymers of acrylic acid or methacrylic acid, vinyl polymer, poly(2-acrylamido-2-methyl-1-propanesulfonic acid), poly(diallyldimethylammonium chloride), cationic-modified polymers, preferably selected from the group consisting of cationic-modified galactomannan, cationic-modified cellulose, cationic-modified starch, cationic-modified dextran, cationic-modified glucan, cationic-modified polyacrylamide, cationic-modified polyvinylpyrrolidone, cationic-modified polyvinyl alcohol, and mixtures thereof.

In a preferred embodiment, constituent a3-4) is selected from the group consisting of polysaccharides, polyacrylamides, poloxyethylenes, polymers and copolymers of acrylic acid or methacrylic acid, vinyl polymers, poly(2-acrylamido-2-methyl-1-propanesulfonic acid), poly(diallyldimethylammonium chloride), and mixtures thereof.

In preferred embodiments, Component A of a kit according to the present invention is in the form of an oil solution which comprises

constituent a2) consisting of triglycerides, fatty alcohols, fatty esters, fatty amides, fatty aldehydes, fatty ketones, aromatic solvents, chlorinated solvents, and mixtures thereof,
and
constituent a3-1), wherein constituent a3-1) is preferably selected from the group of organic solvents consisting of $C_2$-$C_8$ alkylene glycols (propylene glycol and/or hexylene glycol, dipropylene glycol, 1,3-propanediol, 1,4-butanediol, 1,3-butanediol), $C_2$-$C_8$ alkylene glycol alkyl ether (preferably propylene glycol methyl ether), $C_2$-$C_8$ alkylene carbonates (preferably propylene carbonate), and mixtures thereof.

In preferred embodiments, Component A of a kit according to the present invention is in the form of an oil-continuous suspension (preferably as defined above) and wherein constituent a2) consists of one or more oily substances selected from the group defined above (as preferred),
and which preferably does not contain a constituent a3-1), and preferably does not contain any of the organic solvents from the group of organic solvents cconsisting of $C_2$-$C_8$ alkylene glycols, $C_2$-$C_8$ alkylene glycol alkyl ether, $C_2$-$C_8$ alkylene carbonates.

In some embodiments, the Component A composition comprises an oil-continuous emulsion selected from the group consisting of water-in-oil emulsion, oil-in-oil emulsion, and mixtures thereof. In certain embodiments, the Component A composition comprises an oil-continuous emulsion, comprising more than one emulsified phase, for example, in the form selected from the group consisting of water-in-oil co-emulsion, oil-in-oil co-emulsion, and mixtures thereof. Such oil-in-oil emulsions and oil-in-oil co-emulsion are for example described in WO 2019/236738.

In some embodiments, Component A of a kit according to the present invention is in the form of an oil-in-oil emulsion comprising one or more emulsified oil phases selected from the group consisting of oily herbicidal active ingredients, preferably one or more oily herbicidal active ingredients from the (preferred) acetamide herbicides defined above.

An oily herbicidal active ingredient in the context of the present invention is an herbicidal active ingredient which is flowable at 25°C and 1013 mbar (as defined above), and has a solubility in deionized water at a pH of 7 at 20°C of 25 g or less, typically 20 g or less, preferably 16 g or less, more preferably 10 g or less, per 1000 g of water.

In the context of the present invention, in a particularly preferred embodiment Component A of a kit according to the present invention is in the form of an oil-in-oil emulsion.

Component A of a kit according to the present invention thus can be an emulsified phase composition. For example, to be mentioned are oil-continuous suspensions of herbicidal active ingredients that are solid at 25°C and 1013 mbar and have a solubility in deionized water at a pH of 7 at 20°C of 25 g or less (typically 20 g or less, particularly 16 g or less, and more particularly 10 g) per 1000 g of water, where,

(i) the oil-continuous, oil phase of the oil-continuous suspension of herbicidal active ingredients is substantially immiscible (solubility of less than 1% by weight) with the oil-continuous, oil phase of the oil-in-oil emulsion;
(ii) the solid herbicidal ingredients in the oil-continuous suspension as the emulsified phase in the oil-in-oil emulsion is insoluble or sparingly soluble in the oil-continuous, oil phase of the suspension, as well as in the oil-continuous, oil-phase of the oil-in-oil emulsion.

The oil-continuous, oil phase of either the oil-in-oil emulsion or the oil-continuous suspension of such solid herbicidal active ingredients as the emulsified phase in oil-in-oil emulsion can preferably be selected from the group of

oily herbicidal active ingredients, triglycerides (e.g. castor oil), aliphatic hydrocarbons (alkanes and/or cycloalkanes, mineral oils), silicone oils, fatty esters, fatty amides, aromatic solvents, and mixtures thereof.

In particularly preferred embodiments, Component A of a kit according to the present invention is essentially free of surfactants having a hydrophilic-lipophilic balance (HLB) value of equal to or greater than 6, preferably surfactants having a hydrophilic-lipophilic balance (HLB) value of equal to or greater than 6 are present in a total amount of less than about 1% by weight, typically in an amount in the range of from 0% to about 1% by weight, based on the total weight of Component A.

Component A of a kit of the present invention can include one or more of the features as described herein in various combinations.

**Component B**

Constituent b1) of Component B of the kit according to the present invention preferably is selected from the group consisting of

constituent b1a) drift retarding agents (DRAs),
constituent b1b) volatility control agents, and mixtures thereof,

wherein constituents b1a) and b1b) each are different from constituent a1) of Component A and from constituent b2) of Component B.

Drift retarding agents include, for example, GARDIAN, GARDIAN PLUS, DRI-GARD, and PRO-ONE XL available from Van Diest Supply Co.; COMPADRE, available from Loveland Products, Inc.; BRONC MAX EDT, BRONC PLUS DRY EDT, EDT CONCENTRATE, and IN-PLACE available from Wilbur-Ellis Company; STRIKE ZONE DF available from Helena Chemical Co.; INTACT and INTACT XTRA available from Precision Laboratories, LLC; and AGRHO DR 2000 and AGRHO DEP 775 available from the Solvay Group. Suitable drift retarding agents also include, for example, guar-based (e.g. containing guar gum or derivatized guar gum) drift retarding agents. Non-cellulosic polysaccharide, e.g. guar-based, derivatives, such as cationic guar gum, are for example known from WO 2013/011122, WO 03/095497 or US 2001/0051140.

According to various embodiments, the Component B composition preferably exhibits both physical (and typically also chemical) stability over a wide temperature range, for example, in the range of from about -20°C to about 35°C, more preferably in the range of from about -20°C to about 40°C, and often in the range of from about -20°C to about 54°C.

According to preferred embodiments, the Component B composition has a pourable or pumpable consistency at 25°C, typically having a Brookfield viscosity at 25°C of less than about 2000 cps, preferably of less than about 1500 cps, more preferably of less than about 1000 cps, in each case with the viscosity measured at 20 rpm of spindle-speed (Brookfield viscometer LV).

Component B of a kit according to the present invention preferably is liquid at 25°C and 1013 mbar (as defined above).

Component B of a kit of the present invention preferably is free of herbicidal active ingredients.

Component B of a kit of the present invention preferably is free of pesticidal active ingredients.

Preferably, the amount of constituent b1) in Component B is in the range of from about 5 wt.% to about 80 wt.%, based on the total weight of Component B.

Preferably, the amount of constituent b1) in Component B is in the range of from about 10 wt.% to about 70 wt.%, preferably in the range of from about 20 wt.% to about 60 wt.%, in each case based on the total weight of Component B.

In various embodiments, constituent b1) of Component B of a kit according to the present invention preferably comprises or consists of constituent b1a-1) oily drift retarding agents substantially insoluble in water (oily DRAs).

The oily DRA of constituent b1a-1) of Component B is substantially immiscible in water and preferably has a solubility of less than 1.0% by weight in deionized water at pH 7 at 20°C.

If constituent b1a-1) is present in constituent b1) of Component B of a kit according to the present invention, constituent b1a-1) preferably has a HLB value requirement in the range of about 5 to about 25. Reference is made also to the General Procedure G2 below.

If constituent b1a-1) is present in constituent b1) of Component B of a kit according to the present invention, constituent b1a-1) preferably is selected from the group consisting of fatty acid esters, triglycerides, vegetable oils, fatty alcohols, silicone oils, fatty esters, fatty amides, fatty aldehydes, fatty ketones, aromatic solvents, chlorinated solvents, aliphatic hydrocarbons and aromatic hydrocarbons, and mixtures thereof. The term "fatty" used in the context of the present invention refers to hydrocarbon chains with $C_8$-$C_{30}$ carbon atoms, in particular to hydrocarbon chains with $C_{12}$-$C_{18}$ carbon atoms.

Preferably, constituent b1a-1) of constituent b1) of Component B of a kit according to the present invention is selected from the group consisting of triglycerides, vegetable oils, $C_{12}$-$C_{18}$ alcohols, silicone oils, $C_{12}$-$C_{18}$ esters, $C_{12}$-$C_{18}$ amides, $C_{12}$-$C_{18}$ aldehydes, $C_{12}$-$C_{18}$ ketones, $C_7$-$C_{14}$ chlorinated solvents, $C_{12}$-$C_{18}$ aliphatic hydrocarbons and $C_{10}$-$C_{16}$ aromatic hydrocarbons, and mixtures thereof.

In a preferred embodiment, the oily DRA of constituent b1a-1) of Component B comprises methyl oleate and/or methyl linoleate, or comprises or consists a mixture of methyl oleate and methyl linoleate.

In a preferred embodiment, the oily DRA of constituent b1a-1) of Component B is a mixture of methyl oleate / methyl linoleate and a $C_{10}$-$C_{18}$ paraffinic hydrocarbon, preferably $C_{10}$-$C_{18}$ isoalkanes.

In various embodiments, constituent b1) of Component B of a kit according to the present invention preferably comprises or consists of constituent b1a-2) polymeric drift retarding agents (polymeric DRAs).

The polymeric DRA of constituent b1a-2) of Component B is a water-soluble, non-amphiphilic polymer having a solubility in deionized water at a pH of 7 at 20°C of 53 g or higher (i.e. 53 g or more) per 1000 g of water.

If constituent b1a-2) is present in constituent b1) of Component B of a kit according to the present invention, constituent b1a-1) preferably is selected from the group consisting of polysaccharides, polyacrylamides, polyethylene oxides, polysulfonates, polysulfates, polyvinylpyrrolidones, polyvinyl alcohols, polyacrylates, polymers and copolymers of acrylic acid or methacrylic acid, vinyl polymer, poly(2-acrylamido-2-methyl-1-propanesulfonic acid), poly(diallyldimethylammonium chloride), and mixtures thereof.

Herein, by non-amphiphilic polymer is meant a polymer wherein the equilibrium surface tension of polymer solution containing about 0.1 wt.% of the polymer dissolved in deionized water at a pH of 7 at 20°C is greater than about 40 dynes/cm. Surface tension is measured using a force tensiometer, based on the Wilhelmy plate method known in the art.

If constituent b1a-2) is present in constituent b1) of Component B of a kit according to the present invention, constituent b1a-2) preferably is selected from the group consisting of cationic-modified polymers, preferably selected from the group consisting of cationic-modified galactomannan, cationic-modified cellulose, cationic-modified starch, cationic-modified dextran, cationic-modified glucan, cationic-modified polyacrylamide, cationic-modified polyvinylpyrrolidone, cationic-modified polyvinyl alcohol, and mixtures thereof.

Preferred in the context of the present invention as polymeric drift retarding agent if present, i.e. as (part of) constituent b1a-2) of Component B and/or as (part of) constituent a3-4) of Component A of a kit according to the present invention, is cationic guar gum. Cationic guar gum is known in the art, e.g. from WO 2013/011122, WO 03/095497 or US 2001/0051140. Preferred in turn is cationic guar gum with a mean average molecular wight (Mw) in the range of from about 100000 to about 2000000, preferably from about 150000 to about 2000000, more preferably from about 200000 to about 1800000, even more preferably from about 300000 to about 1400000, and containing at least one cationic group with a cationic degree of substitution from about 0.20 to about 0.30 as described in WO 2013/011122. The cationic group in the cationic guar gum is preferably selected from the group consisting of trialkylammonium groups (such as trimethylammonium groups, triethylammonium groups, or tributylammonium groups), aryldialkylammonium groups (such as benzyldimethylammonium groups) and ammonium groups in which the nitrogen atom is a member of a ring structure, such as pyridinium groups and imidazoline groups. In some embodiments, said cationic guar gum is guar hydroxypropyltrimethylammonium chloride, preferably with a cationic degree of substitution from about 0.20 to about 0.30 and with a mean average molecular wight (Mw) of from about 100000 to about 2000000, preferably with a mean average molecular wight (Mw) in the preferred, more preferred or even more preferred Mw-range indicated above.

In some embodiments, said cationic guar gum has a weight average molecular mass from 300000 g/mol to 1400000g/mol, contains at least one cationic group which is incorporated into the guar or guar derivative starting material by reaction of the hydroxyl groups of said guar or guar derivative with a cationizing agent chosen from 2,3-epoxypropyltrimethylammonium chloride, 2,3-epoxypropyltrimethylammonium bromide, 2,3-epoxypropyltrimethylammonium iodide, and 3-halogeno-2-hydroxypropyl trimethylammonium chloride, and has a cationic degree of substitution from about 0.20 to about 0.30.

If preferred embodiments, Component B of a kit according to the present invention comprises or consists of constituent b1a-2) polymeric DRAs having a molecular weight of 100000 Dalton or more, preferably of 300000 Dalton or more, preferably of 500000 Dalton or more, more preferably of 1000000 Dalton or more, and even more preferably of 1500000 Dalton or more.

Performance of a drift retarding agent is typically measured by the extent of reduction in the amount of fine, driftable spray droplets of less than about 150 micron in diameter formed during spraying of an agronomic spray application mixture. Generally, at an equivalent or comparable dosage of a DRA polymer, the extent of reduction in the amount of fine spray droplets can vary with variation in the molecular weight of the DRA polymer. The higher the molecular weight, the greater the extent of reduction of fine spray droplets. Furthermore, DRA performance of a DRA polymer can increase with increasing dosage of the DRA polymer, up to some limit. The DRA performance advantage of a higher molecular weight DRA polymer over a lower molecular weight DRA polymer, therefore, can be highly beneficial under relatively low dosages, for example, at much less than 0.1 wt.% of DRA polymers, for example guar gum polymers.

According to a preferred embodiment, the Brookfield viscosity of polymer solution containing about 2.5 wt.% of a (preferred) polymeric DRA of constituent b1a-2) of Component B dissolved in deionized water at a pH of 7 at 20°C is greater than 1000 cps, with the Brookfield viscosity measured at 20 rpm of spindle-speed (Brookfield viscometer LV).

According to a particular embodiment, the weight ratio of Component A and Component B in preparing an agronomic (spray) application mixture is preferably in the range of from about 10:1 to about 50:1. At these preferred weight ratios, the amount of polymeric DRA constituent b1a-2) of Component B can be as low as about 0.001 wt.% to about 0.01 wt.% in of Component B.

In a preferred embodiment, constituent b1) of Component B is a mixture of an oily DRA and a polymeric DRA, i.e. of constituent b1a-1) and constituent b1a-2).

In preferred embodiments, constituent b1) of Component B of a kit according to the present invention comprises or consists of constituent b1a-1) and wherein the total amount of constituent b1a-1) is in the range of from about 1 wt.% to about 50 wt.%, preferably of from about 5 wt.% to about 50 wt.%, more preferably of from about 10 wt.% to about 50 wt.%, even more preferably of from about 25 wt.% to about 50 wt.%, in each case are based on the total weight of Component B.

In preferred embodiments, constituent b1) of Component B of a kit according to the present invention comprises or consists of constituent b1a-2) and wherein the total amount of constituent b1a-2) is in the range of from about 0.01 wt.% to about 10 wt.%, preferably of from about 0.05 wt.% to about 10 wt.%, more preferably of from about 0.075 wt.% to about 10 wt.%, even more preferably of from about 0.1 wt.% to about 10 wt.%, in each case are based on the total weight of Component B.

In preferred embodiments, the total amount of constituent b1a) of Component B of a kit according to the present invention is in the range of from about 0.1 wt.% to about 60 wt.%, preferably of from about 0.25 wt.% to about 50 wt.%, more preferably of from about 0.5 wt.% to about 40 wt.%, in each case are based on the total weight of Component B.

The emulsifying surfactants of constituent b2) of Component B of a kit according to the present invention can be selected from the group consisting of non-ionic surfactants, surfactant anionic surfactants, cationic surfactants, zwitterionic surfactants, and mixtures thereof.

Examples of preferred ionic surfactants include alkyl/aryl ether sulfates, alkyl/aryl ether sulfonates, alkyl/aryl ether carboxylates, alkyl/aryl ether phosphates, dialkyl sulfosuccinates, ethoxylated ether amines, ethoxylated-propoxylated ether amines, alkyl/aryl quaternary amine compounds, alkyl/aryl quaternary phosphonium compounds, ethoxylated alkyl/aryl quaternary amine compounds, ethoxylated alkyl/aryl quaternary phosphonium compounds, betaines, sultaines, phospholipids, and mixtures thereof.

The surfactant can comprise a non-ionic surfactant, since non-ionic surfactants are typically more effective than ionic surfactants in emulsifying oils in water in the presence of hard water cations.

In preferred embodiments, constituent b2) of Component B of a kit according to the present invention comprises or consists of emulsifying surfactants (for oil-in-water emulsions) selected from the group consisting of phosphate esters, ethoxylated phosphate esters, ethoxylated tristyrylphenol phosphate esters, ethylene oxide-propylene oxide block copolymers, alkylated ethylene oxide-propylene oxide block copolymers, sulfate esters, sulfonate esters, carboxylate esters, sorbitan esters, ethoxylated sorbitan esters, sucrose esters, ethoxylated sucrose esters, glycerol esters, glycol esters, ethoxylated castor oils, alcohol ethoxylates, ethoxylated alkyl sulfonates, ethoxylated aryl sulfonates, ethoxylated alkyl sulfates, ethoxylated aryl sulfates, ethoxylated alkyl carboxylates, ethoxylated aryl carboxylates, alkyl polyglucosides, lignosulfonates, sulfonated kraft lignins, oxylignins, dimethicone copolyols, and mixtures thereof.

In preferred embodiments, at least one of the emulsifying surfactants of constituent b2) of Component B of a kit according to the present invention has a molecular weight in the range of from 220 g/mol to 1000 g/mol, preferably in the range of from 240 g/mol to 750 g/mol, more preferably in the range of from 250 g/mol to 600 g/mol, and even more preferably in the range of from 250 g/mol to 500 g/mol.

In preferred embodiments, at least one of the emulsifying surfactants of constituent b2) of Component B of a kit according to the present invention has a molecular weight of 300 g/mol or more.

Constituent b2) of Component B preferably consists of one or more emulsifying surfactant or emulsifying surfactant mixture comprising amphiphilic compounds. In this regard, by amphiphilic compound is meant a compound which, if soluble in water, when dissolved in deionized water at an amount of about 1 wt.%, the interfacial tension value measured at 20°C for air-water interface is at least about 25% to about 50% lower than the interfacial tension value measured at 20°C for air-water interface in the absence of the said amphiphilic compound. Additionally, by amphiphilic compound is meant herein a compound which, if insoluble in water, but soluble in a given oil, when dissolved in the said oil at an amount of about 1 wt.%, the interfacial tension value measured at 20°C for the given oil-water interface is at least about 25% to about 50% lower than the interfacial tension value measured at 20°C for the same given oil-water interface in the absence of the said amphiphilic compound. Interfacial tension is measured using any of the methods known in the art, for example, Wilhelmy plate method and pendant drop method.

If the emulsifying surfactant comprises a single amphiphilic compound, the hydrophilic-lipophilic balance (HLB) value of the said amphiphilic compound is preferably in the range of about 7 to about 18. Alternatively, if the emulsifying

surfactant is an emulsifying surfactant mixture comprising more than one amphiphilic compound, individual amphiphilic compounds comprising the said emulsifying surfactant mixture have respective HLB values starting with an HLB value of about 1, wherein the HLB value of the emulsifying surfactant mixture preferably is in the range of about 7 to about 18, more preferably in the range of from about 8 to about 15.

In a preferred embodiment, constituent b2) of Component B comprises or consist of a mixture of polyoxyethylene (20) sorbitan ester and butylated ethylene oxide-propylene oxide block copolymer.

In another preferred embodiment, constituent b2) of Component B comprises or consist of a mixture of polyoxyethylene (20) sorbitan monooleate and butylated ethylene oxide-propylene oxide block copolymer.

In another preferred embodiment, constituent b2) of Component B comprises or consist of a mixture of polyoxyethylene (12) monotridecyl ether phosphate and butylated ethylene oxide-propylene oxide block copolymer.

In yet other preferred embodiments, constituent b2) of Component B comprises or consist of a mixture of polyoxyethylene (12) monotridecyl ether phosphate, a sulfosuccinate surfactant (preferably dioctyl sodium sulfosuccinate), and butylated ethylene oxide-propylene oxide block copolymer.

In other preferred embodiments, constituent b2) of Component B comprises or consist of a mixture of polyoxyethylene (12) monotridecyl ether phosphate a sulfosuccinate surfactant (preferably dioctyl sodium sulfosuccinate), butylated ethylene oxide-propylene oxide block copolymer, and polyoxyethylene (20) sorbitan ester (preferably polyoxyethylene (20) sorbitan monooleate).

In preferred embodiments, the total amount of constituent b2) of Component B of a kit according to the present invention is in the range of from about 5 wt.% to about 60 wt.%, preferably in the range of from about 10 wt.% to about 55 wt.%, more preferably in the range of from about 10 wt.% to about 40 wt.%, in each case based on the total weight of Component B.

Component B of a kit according to the present invention may comprise one or more volatility control agents to control or reduce potential herbicide volatility. Under some application conditions, certain herbicides such as auxin herbicides, can vaporize into the surrounding atmosphere and migrate from the application site to adjacent crop plants, such as soybeans and cotton, where contact damage to sensitive plants can occur. For example, as described in US2014/0128264 and US2015/0264924, which are incorporated herein by reference, agents to control or reduce potential herbicide volatility include monocarboxylic acids, or salts thereof (e.g. acetic acid and/or an agriculturally acceptable salt thereof.

Representative monocarboxylic acids and monocarboxylates generally comprise a hydrocarbon or unsubstituted hydrocarbon selected from, for example, unsubstituted or substituted, straight or branched chain alkyl (e.g. $C_1$-$C_{20}$ alkyl such as methyl, ethyl, n-propyl, isopropyl, etc.); unsubstituted or substituted, straight or branched chain alkenyl (e.g. $C_2$-$C_{20}$ alkyl such as ethenyl, n-propenyl, isopropenyl, etc.); unsubstituted or substituted aryl (e.g. phenyl, hydroxyphenyl, etc.); or unsubstituted or substituted arylalkyl (e.g. benzyl). In particular, the monocarboxylic acid can be selected from the group consisting of formic acid, acetic acid, propionic acid, and benzoic acid.

Other volatility control agents to control or reduce potential herbicide volatility that useful for the compositions of the present invention include various quaternary amine compounds. Quaternary amine compounds include various alkyl/aryl quaternary amine compounds and alkoxylated alkyl/aryl quaternary amine compounds.

Typically, the quaternary amine compounds have a molecular weight that is no greater than about 1000 Da, no greater than about 750 Da, or no greater than about 500 Da. For example, in various embodiments, quaternary amine compounds have a molecular weight that is from about 100 Da to about 1000 Da, from about 100 Da to about 750 Da, from about 100 Da to about 500 Da, from about 200 Da to about 1000 Da, from about 200 Da to about 750 Da, from about 200 Da to about 500 Da, from about 250 Da to about 1000 Da, from about 250 Da to about 750 Da, or from about 250 Da to about 500 Da.

Preferably, Component B of a kit according to the present invention further comprises one or more substances of constituent b1b) selected from the group consisting of constituents b1b-1), b1b-2) and b1b-12):

b1b-1) salts of $C_1$-$C_{10}$ monocarboxylic acids,
b1b-2) non-amphiphilic $C_2$-$C_6$ alkyl quarternary ammonium compounds,
and
b1b-12) wherein said constituent b1b-12) is (i) a volatility control agent for herbicidal active ingredients and (ii) an amphiphilic compound with a hydrophilic-lipophilic balance (HLB) value of equal to or greater than 6, wherein constituent b1b-12) is different from constituent b2) of Component B.

More preferably, Component B of a kit according to the present invention further comprises one or more substances of constituent b1b) selected from the group consisting of constituents b1b-1), b1b-2) and b1b-12):

b1b-1) salts of $C_1$-$C_8$ monocarboxylic acids, preferably of $C_1$-$C_4$ monocarboxylic acids,
b1b-2) non-amphiphilic $C_2$-$C_4$ alkyl quarternary ammonium compounds,

and

b1b-12) wherein said constituent b1b-12) is (i) a volatility control agent for herbicidal active ingredients and (ii) an amphiphilic compound with a hydrophilic-lipophilic balance (HLB) value in the range of from about 7 to about 18, preferably in the range of from about 8 to about 15, wherein constituent b1b-12) is different from constituent b2) of Component B.

Constituent b1b-1) is readily water-soluble at a pH of 7 at 20°C. With respect to the salts of monocarboxylic acids suitable as constituent b1b-1) of Component B of a kit according to the present invention, reference is also made to WO 2014/071374.

In preferred embodiments, Component B of a kit according to the present invention comprises one or more substances of constituent b1b-1), wherein constituent b1b-1) is selected from the group consisting of alkali metal salts of $C_1$-$C_8$ monocarboxylic acids, and mixtures thereof, and preferably are selected from the group consisting of alkali metal salts of formic acid, acetic acid, propionic acid and benzoic acid, more preferably comprising or consisting of potassium acetate, potassium formate, sodium acetate, and/or sodium formate, even more preferably comprising or consisting of potassium acetate and/or potassium formate.

In preferred embodiments, Component B of a kit according to the present invention comprises one or more substances of constituent b1b-1), wherein the total amount of constituent b1b-1) in Component B is in the range of from about 5 wt.% to about 90 wt.%, preferably in the range of from about 5 wt.% to about 80 wt.%, more preferably in the range of from about 5 wt.% to about 70 wt.%, in each case based on the total weight of Component B.

In preferred embodiments, Component B of a kit according to the present invention comprises one or more substances of constituent b1b-1), wherein the total amount of constituent b1b-1) in Component B is in the range of from about 10 wt.% to about 70 wt.%, more preferably in the range of from about 20 wt.% to about 70 wt.%, even more preferably in the range of from about 30 wt.% to about 60 wt.%, in each case based on the total weight of Component B.

In preferred embodiments of a kit according to the present invention,

constituent a1) of Component A of a kit according to the present invention comprises one or more auxin herbicidal active ingredients, and

Component B of a kit according to the present invention comprises constituent b1b-1),

wherein the molar ratio of the total amount of constituent b1b-1) of Component B) to the total amount of auxin herbicidal active ingredients present in constituent a1) of Component A is in the range of from about 1:4 to about 10:1.

In preferred embodiments, Component B of a kit according to the present invention comprises constituent b1b-2), wherein constituent b1b-2) is selected from the group consisting of $C_2$-$C_6$ alkyl quarternary ammonium halides, $C_2$-$C_6$ alkyl quarternary ammonium hydroxides, $C_2$-$C_6$ alkyl quarternary ammonium sulfates, $C_2$-$C_6$ alkyl quarternary ammonium methosulfates, and mixtures thereof.

In preferred embodiments, Component B of a kit according to the present invention comprises constituent b1b-2), wherein constituent b1b-2) is selected from the group consisting of $C_2$-$C_4$ alkyl quarternary ammonium halides, $C_2$-$C_4$ alkyl quarternary ammonium hydroxides, $C_2$-$C_4$ alkyl quarternary ammonium sulfates, $C_2$-$C_4$ alkyl quarternary ammonium methosulfates, and mixtures thereof.

In this context, by non-amphiphilic $C_2$-$C_6$ or $C_2$-$C_4$ alkyl quaternary ammonium compound is meant a $C_2$-$C_6$ or $C_2$-$C_4$ alkyl quaternary ammonium compound wherein the equilibrium surface tension of an aqueous solution containing about 0.1 wt.% of the said quaternary ammonium compound dissolved in deionized water at a pH of 7 at 20°C is greater than about 40 dynes/cm. Surface tension is measured using a force tensiometer, based on the Wilhelmy plate method known in the art.

In more preferred embodiments, Component B of a kit according to the present invention comprises constituent b1b-2), wherein constituent b1b-2) is selected from the group consisting of tetrabutylammonium compounds, preferably n-tetrabutylammonium halides (in particular n-tetrabutylammonium chloride), n-tetrabutylammonium sulfate or n-tetrabutylammonium hydroxide.

In preferred embodiments, Component B of a kit according to the present invention comprises constituent b1b-2), wherein the total amount of constituent b1b-2) in Component B is in the range of from about 5 wt.% to about 70 wt.%, preferably in the range of from about 10 wt.% to about 70 wt.%, more preferably in the range of from about 20 wt.% to about 70 wt.%, even more preferably in the range of from about 30 wt.% to about 70 wt.%, in each case based on the total weight of Component B.

In preferred embodiments of a kit according to the present invention,

constituent a1) of Component A of a kit according to the present invention comprises one or more auxin herbicidal active ingredients, and

Component B of a kit according to the present invention comprises constituent b1b-2),

wherein the molar ratio of the total amount of constituent b1b-2) of Component B) to the total amount of auxin herbicidal active ingredients present in constituent a1) of Component A is in the range of from about 1:4 to about 10:1.

In some embodiments, Component B of a kit according to the present invention comprises constituent b1b-12), wherein said constituent b1b-12) comprises or consists of a quaternary amine compound, wherein the quaternary amine compound has a structure of formula (I):

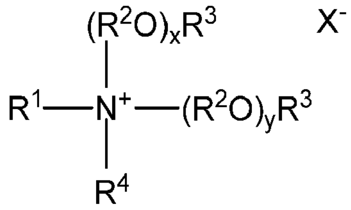

(I)

wherein $R^1$ is hydrocarbyl or substituted hydrocarbyl having from 1 to about 30 carbon atoms; each $R^2$ in each of the $(R^2O)_x$ and $(R^2O)_y$ groups is independently a linear or branched $C_2$-$C_4$ alkylene; each $R^3$ is independently hydrogen, or a linear or branched alkyl group having from 1 to about 4 carbon atoms; $R^4$ is hydrocarbyl or substituted hydrocarbyl having from 1 to about 30 carbon atoms; x and y are independently a number from 0 to about 10; and $X^-$ is an agriculturally acceptable anion.

In various embodiments, the $R^1$ and $R^4$ hydrocarbyl groups are each independently linear or branched alkyl, linear or branched alkenyl, linear or branched alkynyl, linear or branched alkoxy, aryl, or aralkyl having from 1 to about 30 carbon atoms. In certain embodiments, $R^1$ and $R^4$ are each independently a linear or branched alkyl, linear or branched alkenyl, or linear or branched alkoxy having from 1 to about 25 carbon atoms from 1 to about 22 carbon atoms, from 1 to about 20 carbon atoms, from 1 to about 18 carbon atoms, from 3 to about 25 carbon atoms from 3 to about 22 carbon atoms, from 3 to about 20 carbon atoms, from 3 to about 18 carbon atoms, from 3 to about 16 carbon atoms, from 3 to about 14 carbon atoms, from 3 to about 12 carbon atoms, from 3 to about 10 carbon atoms, from 3 to about 8 carbon atoms, or from 3 to about 6 carbon atoms. In some embodiments, $R^1$ and $R^4$ have the same number of carbon atoms and/or are the same substituent group (e.g. $R^1$ and $R^4$ are each butyl).

In some embodiments, $R^1$ is a linear or branched alkyl, linear or branched alkenyl, or linear or branched alkoxy having from 3 to about 25 carbon atoms, from 3 to about 22 carbon atoms, 3 to about 20 carbon atoms, or from about 3 to 18 carbon atoms. In these and other embodiments, $R^4$ is a linear or branched alkyl, linear or branched alkenyl, or linear or branched alkoxy having from 1 to about 12 carbon atoms, from 1 to about 10 carbon atoms, 1 to about 8 carbon atoms, from about 1 to 6 carbon atoms, from about 1 to 4 carbon atoms, from 3 to about 12 carbon atoms, from 3 to about 10 carbon atoms, 3 to about 8 carbon atoms, or from about 3 to 6 carbon atoms.

As noted, each $R^2$ in each of the $(R^2O)_x$ and $(R^2O)_y$ groups is independently a $C_2$-$C_4$ linear or branched alkylene. For example, quaternary amine compounds of formula (I) comprise various alkoxylated compounds including ethoxylated quaternary amine compounds, propoxylated quaternary amine compounds, and quaternary amine compounds comprising various polymers or copolymers of ethylene oxide (EO) and propylene oxide (PO). In some embodiments, each $R^2$ in each of the $(R^2O)_x$ and $(R^2O)_y$ groups is independently a linear or branched $C_2$-$C_4$ alkylene. In certain embodiments, each $R^2$ in each of the $(R^2O)_x$ and $(R^2O)_y$ groups is independently ethylene or propylene. In certain embodiments, the quaternary amine compounds comprise a molar ratio of EO (i.e., where $R^2$ is ethylene) to PO (i.e., where $R^2$ is propylene) from about 1:3 to about 3:1, from about 1:3 to about 2:1, from about 1:3 to about 1.5:1, from about 1:3 to about 1:1, from about 1:3 to about 1:2, from about 1:2 to about 3:1, from about 1:2 to about 2:1, from about 1:2 to about 1.5:1, from about 1:2 to about 1:1, from about 1:1 to about 3:1, from about 1:1 to about 2:1, or from about 1:1 to about 1.5:1.

In various embodiments, x and y are independently a number from 0 to about 8, from 0 to about 6, from 0 to about 4, from about 0 to about 2, from 1 to about 8, from 1 to about 6, from 1 to about 4, from 1 to 2. In some embodiments, x and y are each 0. In other embodiments, x and y are each 1.

In various embodiments, each $R^3$ is independently hydrogen, methyl or ethyl. In some embodiments, each $R^3$ is independently hydrogen or methyl. In certain embodiments, each $R^3$ is hydrogen.

$X^-$ is a charge balancing counter-anion, such as sulfate, hydroxide, chloride, bromide, nitrate, among others. In some embodiments, $X^-$ is a chloride or hydroxide anion. In certain embodiments, $X^-$ is not a hydroxide anion when x and y are each 0 and at least one of $R^1$, $R^2$, $R^3$, and $R^4$ is an alkyl with 2 to 4 carbon atoms or an arylalkyl.

Particular examples of quaternary amine compounds include tetrabutyl ammonium salts (e.g. tetrabutyl ammonium chloride and tetrabutyl ammonium chloride hydroxide) and trimethyl-tetradecyl ammonium salts (e.g. trimethyl-tetradecyl ammonium chloride). Other examples include the Tomamine series of quaternary amine compounds available from Evonik, particularly the Tomamine Q-series, which are represented by formula (II):

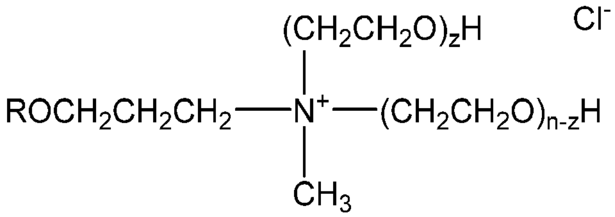

(II)

where R is alkyl (e.g. $C_1$-$C_{20}$ alkyl), n is the total number of moles of EO ($CH_2CH_2O$), and n + z is typically a number from 0 to 15. Specific examples of Tomamines include Q-14-2 (isodecyloxypropyl dihydroxyethyl methyl ammonium chloride), Q-17-2 (isotridecyloxypropyl dihydroxyethyl methyl ammonium chloride), Q-17-5 (isotridecyloxypropyl poly(5)oxyethylene methyl ammonium chloride), and Q-18-2 (octadecyl dihydroxyethyl methyl ammonium chloride).

In preferred embodiments, Component B of a kit according to the present invention comprises constituent b1b-12), wherein at least one substance of said constituent b1b-12) has a molecular weight in the range of from 220 g/mol to 1000 g/mol, preferably in the range of from 240 g/mol to 750 g/mol, more preferably in the range of from 250 g/mol to 600 g/mol, and even more preferably in the range of from 250 g/mol to 500 g/mol.

In preferred embodiments, Component B of a kit according to the present invention comprises constituent b1b-12), wherein at least one substance of said constituent b1b-12) has a molecular weight of 300 g/mol or more.

In preferred embodiments, Component B of a kit according to the present invention comprises constituent b1b-12), wherein said constituent b1b-12) comprises or consists of amphiphilic alkyl amine compounds having at least one carbon alkyl chain with 12 or more carbon atoms, amphiphilic alkyl quaternary ammonium compounds having at least one alkyl chain with 10 or more carbon atoms, amphiphilic ethoxylated alkyl quaternary ammonium compounds having at least one carbon alkyl chain with 10 or more carbon atoms and amphiphilic aryl-alkyl quaternary ammonium compounds having at least one carbon alkyl chain with 8 or more carbon atoms, and mixtures thereof.

In preferred embodiments, the total amount of constituent b1b-12) of Component B of a kit according to the present invention is in the range of from about 5 wt.% to about 60 wt.%, preferably in the range of from about 10 wt.% to about 50 wt.%, more preferably in the range of from about 10 wt.% to about 40 wt.%, in each case based on the total weight of Component B.

In preferred embodiments, Component B of a kit according to the present invention comprises one or more further constituents selected from the group consisting of b3-1), b3-2) and b3-3):

b3-1) neutralizing agents,
b3-2) pH-buffering agents, and
b3-3) water.

The substances of constituent b3-1) are readily water-soluble and non-amphiphilic.

In preferred embodiments, Component B of a kit according to the present invention comprises one or more further constituents selected from the group consisting of b3-1) and b3-2),

wherein the substances of constituent b3-1) are alkaline substances, preferably selected from the group consisting of non-quaternary amines, alkali metal hydroxides, alkaline earth metal hydroxides, alkali metal carbonates, alkaline earth metal carbonates, alkali metal bicarbonates, alkaline earth metal bicarbonates, and mixtures thereof,
and/or
wherein the substances of constituent b3-2) are selected from the group consisting of phosphate buffering agents, citrate buffering agents, and mixtures thereof.

In preferred embodiments, Component B of a kit according to the present invention comprises one or more further constituents selected from the group consisting of b3-1) and b3-2),

wherein the substances of constituent b3-1) are alkaline substances selected from the group consisting of optionally (hydroxy) substituted mono-$C_2$-$C_6$ alkyl primary amines (e.g. monoethanolamine), optionally (hydroxy)substituted di-$C_2$-$C_6$ alkyl secondary amines (e.g. diethanolamine), optionally (hydroxy) substituted tri-$C_2$-$C_6$ alkyl tertiary amines (e.g. triethanolamine), alkali metal hydroxides, alkaline earth metal hydroxides, alkali metal carbonates, alkaline earth metal carbonates, alkali metal bicarbonates, alkaline earth metal bicarbonates, and mixtures thereof,
and
wherein the substances of constituent b3-2) are selected from the group consisting of phosphate buffering agents, citrate buffering agents, and mixtures thereof.

In preferred embodiments, Component B of a kit according to the present invention comprises one or more further substances of constituent b3-1), wherein the neutralizing agents of constituent b3-1) are selected from the group consisting of alkaline substances and mixtures thereof, and preferably are selected from the group consisting of alkali metal hydroxides, more preferably comprising or consisting of sodium hydroxide (NaOH).

In preferred embodiments, Component B of a kit according to the present invention comprises one or more further substances of constituent b3-2), wherein the neutralizing agents of constituent b3-2) are selected from the group consisting of phosphate buffering agents, citrate buffering agents, and mixtures thereof, and preferably are selected from the group consisting of alkali metal phosphates, more preferably comprising or consisting of potassium phosphate, particularly preferably comprising or consisting of dipotassium phosphate.

In particularly preferred embodiments, Component B of a kit according to the present invention comprises a mixture of methyl oleate/linoleate methyl ester and a paraffinic hydrocarbon as constituent b1a-1), potassium acetate as constituent b1b-1), sodium hydroxide as constituent b3-1), dipotassium phosphate as constituent b3-2).

In preferred embodiments, Component B of a kit according to the present invention comprises one or more further constituents selected from the group consisting of b3-1), b3-2) and b3-3), wherein constituents b3-1), b3-2) and b3-3), if present, are present in the following amounts:

constituent b3-1) neutralizing agents in the total amount of about 1 wt.% to about 10 wt.%,
constituent b3-2) pH-buffering agents in the total amount of about 1 wt.% to about 10 wt.%,
and/or
constituent b3-3) water in the total amount of about 10 wt.% to about 90 wt.%,

wherein the amounts in each case are based on the total weight of Component B.

A microemulsion is an optically transparent emulsion which comprises a water phase, an oil phase, and a surfactant phase, wherein a part of the surfactant phase forms a highly spatially-compact, adsorbed surfactant monolayer at the oil-water interface separating the oil phase and water phase domains of the microemulsion. Any remaining amount of the surfactant phase not adsorbed at the oil-water interface can reside either in the oil phase or in water phase or even in both oil and water phases, depending on solubilities of the surfactant phase in oil and water phases. A characteristic property of microemulsions is that the interfacial tension between the oil and water phases is very low, much lower than can be measured with conventional Tensiometer instruments. This low interfacial tension results from the highly spatially-compact, adsorbed surfactant monolayer at the oil-water interface in microemulsions. As known in the art, depending on the relative proportion of water phase and oil phase contained therein, microstructure of microemulsions can be oil-continuous or water-continuous or bi-continuous.

In preferred embodiments, Component B of a kit according to the present invention is in the form of an aqueous solution, an oil solution, an oil dispersion, a water-continuous emulsion, an oil-continuous emulsion, an oil-continuous suspension, a water-continuous microemulsion, an oil-continuous microemulsion, a bi-continuous microemulsion, and mixtures thereof.

In preferred embodiments, Component B of a kit according to the present invention is an oil-continuous microemulsion, a bi-continuous microemulsion, an oil-continuous suspension, or mixtures thereof.

In the related art, microemulsion compositions are classified as Winsor Type I, Winsor Type II, Winsor Type III, and Winsor Type IV microemulsion, of which only the Winsor Type IV is a single-phase or an isotropic microemulsion composition. With the three other types of microemulsion, a microemulsion composition is not a single-phase microemulsion, comprising one or more separated phases (e.g. a portion of surfactant-containing water phase, a portion of surfactant-containing oil phase) remaining in equilibrium with a microemulsion phase.

In preferred embodiments, Component B of a kit according to the present invention is a Winsor Type IV microemulsion composition having a microstructure selected from the group consisting of oil-continuous microemulsion, bi-continuous microemulsion, and water-continuous microemulsion.

In a preferred kit according to the present invention Component B is an isotropic or Winsor Type IV microemulsion composition comprising an oil phase and a water phase, the said oil phase comprising at least one oily substance as drift retarding agent, and the said water phase comprising water and a non-amphiphilic (not a surfactant), water-soluble substance dissolved in water selected from the group consisting of salts of a $C_1$-$C_{10}$ monocarboxylic acid, pH-buffering agents, neutralizing agents, water-soluble, non-amphiphilic, high molecular weight polymer, and mixtures thereof, wherein the said microemulsion further comprises emulsifying surfactants as part of either the oil phase or of the water phase or of both the oil phase and the water phase contained therein.

In a preferred kit according to the present invention the ratio by weight of the total amount of the oil phase to the total amount of the water phase in Component B is in the range of from about 0.05 to about 10, preferably in the range of from about 0.5 to about 4, and more preferably in the range of from about 1 to about 4, wherein the weight of each of the oil phase and the water phase does not take into account (i.e. does not include) the weight of any of the emulsifying surfactant(s) contained therein.

In a preferred kit according to the present invention Component B is a Winsor Type IV microemulsion composition, further comprising an oil-miscible, surfactant assembly-modifier constituent at an amount in the range wherein the said microemulsion composition has i) a higher thermal stability; and ii) lower viscosity, as compared to the absence (i.e. without) the said oil-miscible, surfactant assembly-modifier constituent.

In a preferred kit according to the present invention the oil-miscible, surfactant assembly-modifier constituent of the Winsor Type IV microemulsion composition of Component B is selected from the group consisting of alkylene glycol, alkylene glycol alkyl ether, alkylene carbonate, alcohol, and mixtures thereof, and preferably selected from the group consisting of hexylene glycol, di(propylene glycol) methyl ether, propylene carbonate, 2-ethylhexanol, and mixtures thereof.

In a preferred kit according to the present invention the amount of the oil-miscible, surfactant assembly-modifier constituent of the isotropic or Winsor Type IV microemulsion composition of Component B is in the range of from about 1 wt.% to about 50 wt.%, based on the weight of the oil phase in the said microemulsion composition not taking into account (i.e. without) the weight of any emulsifying surfactants contained in the said oil phase.

In a preferred kit according to the present invention the closed-cup flash point of the oil-miscible, surfactant assembly-modifier constituent of the Winsor Type IV microemulsion composition of Component B is greater than or equal to 75°C.

In a preferred kit according to the present invention the amount of the oil-miscible, surfactant assembly-modifier constituent of the Winsor Type IV microemulsion composition of Component B is in the range of about 1 wt.% to about 15 wt.%, based on the total weight of Component B.

In another aspect, the present invention relates to certain compositions suitable to be used as Component B of a kit according to the present invention, comprising the following constituents

b1) one or more drift retarding agents (DRAs) selected from the group consisting of aliphatic hydrocarbons, preferably paraffinic hydrocarbons, and aromatic hydrocarbons,
b2) one or more emulsifying surfactants having a hydrophilic-lipophilic balance (HLB) value of equal to or greater than 6, preferably in the range of from about 7 to about 18, more preferably in the range of from about 8 to about 15,

and at least one constituent selected from the group consisting of constituents b3-1) and b3-2):

b3-1) volatility control agents,
b3-2) pH-buffering agents, preferably dipotassium phosphate,

wherein Component B preferably is free of herbicidal active ingredients.

Component B of a kit of the present invention can include one or more of the features as described herein in various combinations.

**Other Additives**

The compositions described herein can further comprise various additives or adjuvants including soil-residual-boosting agents, antifreeze agents, biocides or preservatives (e.g. PROXEL commercially available from Avecia), foliar-penetration-boosting agents, stabilizing agents (e.g. antioxidants), UV light-absorbers, photostabilizers, chelating agents, and antifoam agents (such as Antifoam SE23 from Wacker Silicones Corp.).

**Component A and Component B**

In preferred embodiments, Component A and Component B of a kit according to the present invention both are liquid at 25°C and 1013 mbar (as defined above).

Preferably, the ratio by weight of the total amount of Component A to the total amount of Component B in a kit according to the present invention is in the range of from about 1 : 10 to about 20 : 1.

More preferably, the ratio by weight of the total amount of Component A to the total amount of Component B in a kit according to the present invention is in the range of from about 1 : 5 to about 10 : 1.

A preferred form for Component B, in particular if Component B comprises an oily DRA and a water-soluble, non-amphiphilic polymeric DRA, is a microemulsion, in particular if the foregoing weight-ratio of Component A-to-Component B is greater than or equal to about 3. Thus, in various embodiments, the ratio by weight of the total amount of Component A to the total amount of Component B in a kit according to the present invention preferably is in the range of from about 3 : 1 to about 10 : 1, in particular if Component B is a microemulsion. On the other hand, a macroemulsion is a preferred form for Component B, if the foregoing weight-ratio of Component A-to-Component B is less than or equal to about 1. Thus, in other embodiments, the ratio by weight of the total amount of Component A to the total amount of

Component B in a kit according to the present invention is in the range of from about 1 : 1 to about 1 : 5.

**Herbicidal Application Mixtures and methods for producing said mixtures**

The present invention further relates to various herbicidal application mixtures and processes for preparing these mixtures. Generally, the process comprises mixing water with a kit according to the present invention comprising or consisting of Component A and Component B as described herein to form a herbicidal application mixture.

For a given composition of Component B, the amount of Component B to be combined with Component A in the agronomic application mixtures described herein, is determined based on the targeted concentrations of offsite movement controlling agent(s) contained in Component B, in the said agronomic application mixtures. According to a preferred embodiment, Component B comprises emulsifying surfactant(s) at an amount that can vary directly with or is directly proportional to the weight-ratio of Component A-to-Component B at which these two Components are to be combined in agronomic application mixtures, wherein the higher the said weight-ratio, the higher is the amount of emulsifying surfactant(s) contained in Component B of a kit according to the present invention.

In various embodiments, the herbicidal application mixture is a water-continuous dispersion. That is, upon sufficient dilution with water, the non-water-continuous herbicidal dispersion compositions invert into water-continuous dispersion compositions. For example, a non-water-continuous herbicidal dispersion composition can be diluted with about 5 to about 75 or from about 10 to about 50 times its weight with water.

Application mixtures described herein can contain one or more additional herbicides, typically added in the form of formulated herbicides. As noted, application mixtures can be prepared by diluting the kit according to the present invention comprising or consisting of Component A and Component B as described herein. Additional formulated herbicides can be "tank-mixed" to provide application mixtures comprising one or more further herbicides in addition the herbicide(s) provided by the kit according to the present invention as described herein.

Such further or additional herbicides typically are herbicides different from the herbicides incorporated in Component A of a kit according to the present invention, i.e. other auxin herbicides, acetyl CoA carboxylase (ACCase) inhibitors, enolpyruvyl shikimate-3-phosphate synthase (EPSPS) inhibitors, photosystem I (PS I) inhibitors, photosystem II (PS II) inhibitors, acetolactate synthase (ALS) or acetohydroxy acid synthase (AHAS) inhibitors, mitosis inhibitors, protoporphyrinogen oxidase (PPO) inhibitors, hydroxyphenylpyruvate dioxygenase (HPPD) inhibitors, cellulose inhibitors, oxidative phosphorylation uncouplers, dihydropteroate synthase inhibitors, fatty acid and lipid biosynthesis inhibitors, auxin transport inhibitors, salts and esters thereof, racemic mixtures and resolved isomers thereof, and mixtures thereof. Examples of additional herbicides within these classes are provided below. Where an additional herbicide is referenced generically herein by name, unless otherwise restricted, that herbicide name includes all (commercially available) forms known in the art such as salts, esters, free acids and free bases, as well as stereoisomers of said additional herbicide.

In some embodiments, the additional formulated herbicide comprises an auxin herbicide (i.e., synthetic auxin herbicide) including, for example, 3,6-dichloro-2-methoxybenzoic acid (dicamba); 2,4-dichlorophenoxyacetic acid (2,4-D); 4-(2,4-dichlorophenoxy)butyric acid (2,4-DB); dichloroprop; 2-methyl-4-chlorophenoxyacetic acid (MCPA); 4-(4-chloro-2-methylphenoxy)butanoic acid (MCPB); 4-chlorophenoxyacetic acid; 2,4,5-trichlorophenoxyacetic acid (2,4,5-T); aminopyralid; clopyralid; fluroxypyr; triclopyr; mecoprop; picloram; quinclorac; aminocyclopyrachlor; benazolin; halauxifen; fluorpyrauxifen; methyl 4-amino-3-chloro-5-fluoro-6-(7-fluoro-1H-indol-6-yl)pyridine-2-carboxylate; 4-amino-3-chloro-5-fluoro-6-(7-fluoro-1H-indol-6-yl)pyridine-2-carboxylic acid; benzyl 4-amino-3-chloro-5-fluoro-6-(7-fluoro-1H-indol-6-yl)pyridine-2-carboxylate; methyl 4-amino-3-chloro-5-fluoro-6-(7-fluoro-1-isobutyryl-1H-indol-6-yl)pyridine-2-carboxylate; methyl 4-amino-3-chloro-6-[1-(2,2-dimethylpropanoyl)-7-fluoro-1H-indol-6-yl]-5-fluoropyridine-2-carboxylate; methyl 4-amino-3-chloro-5-fluoro-6-[7-fluoro-1-(methoxyacetyl)-1H-indol-6-yl]pyridine-2-carboxylate; methyl 6-(1-acetyl-7-fluoro-1H-indol-6-yl)-4-amino-3-chloro-5-fluoropyridine-2-carboxylate; potassium 4-amino-3-chloro-5-fluoro-6-(7-fluoro-1H-indol-6-yl)pyridine-2-carboxylate; butyl 4-amino-3-chloro-5-fluoro-6-(7-fluoro-1H-indol-6-yl)pyridine-2-carboxylate; and salts and esters thereof; and mixtures thereof.

In some embodiments, the additional formulated herbicide comprises a PPO inhibitor. PPO inhibitors include, for example, acifluorfen, azafenidin, bifenox, butafenacil, carfentrazone-ethyl, flufenpyr-ethyl, flumiclorac, flumiclorac-pentyl, flumioxazin, fluoroglycofen, fluthiacet-methyl, fomesafen, lactofen, oxadiargyl, oxadiazon, oxyfluorfen, pyraflufen-ethyl, saflufenacil and sulfentrazone, ethyl [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetate, salts and esters thereof, and mixtures thereof. In particular embodiments, the additional herbicide comprises fomesafen and/or a salt of fomesafen such as sodium fomesafen. In some embodiments, the additional herbicide comprises ethyl [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetate.

In various embodiments, the additional formulated herbicide comprises a HPPD inhibitor. HPPD inhibitors include, for example, aclonifen, amitrole, beflubutamid, benzofenap, clomazone, diflufenican, fluridone, flurochloridone, flurtamone, isoxachlortole, isoxaflutole, mesotrione, norflurazon, picolinafen, pyrazolynate, pyrazoxyfen, sulcotrione, tembotrione, topramezone, tolpyralate, tefuryltrione, salts and esters thereof, and mixtures thereof.

In some embodiments, the additional formulated herbicide comprises a PS II inhibitor. PS II inhibitors include, for example, ametryn, amicarbazone, atrazine, bentazon, bromacil, bromoxynil, chlorotoluron, cyanazine, desmedipham, desmetryn, dimefuron, diuron, fluometuron, hexazinone, ioxynil, isoproturon, linuron, metamitron, methibenzuron, metoxuron, metribuzin, monolinuron, phenmedipham, prometon, prometryn, propanil, pyrazon, pyridate, siduron, simazine, simetryn, tebuthiuron, terbacil, terbumeton, terbuthylazine and trietazine, salts and esters thereof, and mixtures thereof.

In certain embodiments, the additional formulated herbicide comprises an ACCase inhibitor. ACCase inhibitors include, for example, alloxydim, butroxydim, clethodim, cycloxydim, pinoxaden, sethoxydim, tepraloxydim and tralkoxydim, salts and esters thereof, and mixtures thereof. Another group of ACCase inhibitors include chlorazifop, clodinafop, clofop, cyhalofop, diclofop, diclofop-methyl, fenoxaprop, fenthiaprop, fluazifop, haloxyfop, isoxapyrifop, metamifop, propaquizafop, quizalofop and trifop, salts and esters thereof, and mixtures thereof. ACCase inhibitors also include mixtures of one or more "dims" and one or more "fops", salts and esters thereof.

In various embodiments, the additional formulated herbicide comprises an ALS or AHAS inhibitor. ALS and AHAS inhibitors include, for example, amidosulfuron, azimsulfruon, bensulfuron-methyl, bispyribac-sodium, chlorimuron-ethyl, chlorsulfuron, cinosulfuron, cloransulam-methyl, cyclosulfamuron, diclosulam, ethametsulfuron-methyl, ethoxysulfuron, flazasulfuron, florazulam, flucarbazone, flucetosulfuron, flumetsulam, flupyrsulfuron-methyl, foramsulfuron, halosulfuron-methyl, imazamethabenz, imazamox, imazapic, imazapyr, imazaquin, imazethapyr, imazosulfuron, iodosulfuron, metsulfuron-methyl, nicosulfuron, penoxsulam, primisulfuron-methyl, propoxycarbazone-sodium, prosulfuron, pyrazosulfuron-ethyl, pyribenzoxim, pyrithiobac, rimsulfuron, sulfometuron-methyl, sulfosulfuron, thiencarbazone, thifensulfuron-methyl, triasulfuron, tribenuron-methyl, trifloxysulfuron and triflusulfuron-methyl, salts and esters thereof, and mixtures thereof.

In further embodiments, the additional formulated herbicide comprises a mitosis inhibitor. Mitosis inhibitors include anilofos, benefin, DCPA, dithiopyr, ethalfluralin, flufenacet, mefenacet, oryzalin, pendimethalin, thiazopyr and trifluralin, salts and esters thereof, and mixtures thereof.

In some embodiments, the additional formulated herbicide comprises a PS I inhibitor such as diquat and paraquat, salts and esters thereof, and mixtures thereof.

In certain embodiments, the additional formulated herbicide comprises a cellulose inhibitor such as dichlobenil and isoxaben.

In still further embodiments, the additional formulated herbicide comprises an oxidative phosphorylation uncoupler such as dinoterb, and esters thereof.

In other embodiments, the additional formulated herbicide comprises an auxin transport inhibitor such as diflufenzopyr and naptalam, salts and esters thereof, and mixtures thereof.

In various embodiments, the additional formulated herbicide comprises a dihydropteroate synthase inhibitor such as asulam and salts thereof.

In some embodiments, the additional formulated herbicide comprises a fatty acid and lipid biosynthesis inhibitor such as bensulide, butylate, cycloate, EPTC, esprocarb, molinate, pebulate, prosulfocarb, thiobencarb, triallate and vernolate, salts and esters thereof, and mixtures thereof.

In further aspects, the present invention relates to methods for producing herbicidal application mixtures, spray application mixtures (tank-mixes).

In preferred embodiments, the present invention relates to a method for producing an application mixture, comprising the steps of providing

Component A as defined herein, preferably in one or more of the preferred embodiments,
Component B as defined herein, preferably in one or more of the preferred embodiments,
and

water,
and mixing Component A, Component B and water until a homogeneous aqueous application mixture is obtained.

In other preferred embodiments, the present invention relates to a method for producing an application mixture, comprising the steps of providing

a kit according to the present invention, preferably in one or more of the preferred embodiments, comprising or consisting of Component A and Component B, and water,
and
mixing Component A, Component B and water until a homogeneous aqueous herbicide application mixture is obtained.

In said methods, the ratio by weight of the total amount water to the total amount of Component A advantageously

is in the range of from about 5 : 1 to 500 : 1, preferably in the range of from about 40 : 1 to 400 : 1, and more preferably in the range of from about 50 : 1 to 300 : 1.

**Methods for controlling undesired vegetation and corresponding uses**

In further aspects, the present invention relates to methods for controlling undesired vegetation (undesired plants or weeds), for example in a crop plant field, by using or applying a kit according to the present invention.

In the context of the present invention, a crop plant field is an area where seeds of crop plants have been sown, where crop plants are growing or where crop plants are intended to be seeded or to be growing.

In preferred embodiments, the present invention relates to a method for controlling undesired vegetation, for example in a crop plant field, the method comprising applying to the field an application mixture obtained according to a method described in the context of the kits according to the present invention, preferably in one of the preferred embodiments.

Preferably, the crop plant is selected from the group consisting of soybean, corn, canola, cotton, peanut, potato, sugar beet and/or wheat.

In preferred embodiments, the (spray) application mixture is applied to the field (i) prior to planting the crop plant or (ii) pre-emergence to the crop plant.

In other preferred embodiments, the (spray) application mixture is applied to the field post-emergence to the crop plant.

In preferred embodiments, the (spray) application mixture is applied to crop plants having one or more herbicide tolerant traits.

Further, the present invention relates to the use of the kits according to the present invention, preferably in one of the preferred embodiments, to control undesired vegetation, preferably to control undesired vegetation in a crop plant field.

Further, the present invention relates to the use of the kits according to the present invention, preferably in one of the preferred embodiments, to produce an application mixture, a spray application mixture or a tank-mix.

**Application of herbicidal application mixtures**

The present invention is also directed to various methods of applying the herbicidal application mixtures obtainable or obtained from kits according to the present invention as described herein.

In various embodiments, the herbicidal application mixture is a herbicidal application mixture used to control weeds in a field of crop plants. Commercially important crop plants include, for example, corn, soybean, cotton, dry beans, snap beans, and potatoes. Crop plants include hybrids, inbreds, and transgenic or genetically modified plants having specific traits or combinations of traits including, without limitation, herbicide tolerance (e.g. resistance to glyphosate, glufosinate, dicamba, sethoxydim, PPO inhibitor, etc.), *Bacillus thuringiensis* (Bt), high oil, high lysine, high starch, nutritional density, and drought resistance. In some embodiments, the crop plants are tolerant to organophosphorus herbicides, acetolactate synthase (ALS) or acetohydroxy acid synthase (AHAS) inhibitor herbicides, auxin herbicides, 4-hydroxyphenylpyruvate dioxygenase (HPPD) inhibitor herbicides and/or acetyl CoA carboxylase (ACCase) inhibitor herbicides, In other embodiments the crop plants are tolerant to glyphosate, dicamba, 2,4-D, MCPA, quizalofop, glufosinate and/or diclofop-methyl. In other embodiments, the crop plant is glyphosate and/or dicamba tolerant. In some embodiments of the present invention, crop plants are glyphosate and/or glufosinate tolerant. In other embodiments, the crop plants are glyphosate, glufosinate and dicamba tolerant. In these and other embodiments, the crop plants are tolerant to PPO inhibitors. In some embodiments of the present invention, crop plants are tolerant to HPPD inhibitors.

The herbicidal application mixture can be applied to a field according to practices known to those skilled in the art. In some embodiments, the herbicidal application mixture is applied to soil of the field, before planting the crop plants or after planting, but pre-emergent to the crop plants. In other embodiments, the herbicidal application mixture is applied to the field post-emergence of the crop plants and/or either before or after emergence of the weed. The herbicidally effective amount of the herbicidal application mixture to be applied is dependent upon various factors including the identity of the herbicides, the crop to be treated, and environmental conditions such as soil type and moisture content.

Examples of monocotyledonous weeds that may be controlled according to methods of the present invention include, but are not limited to, weeds of the genera Aegilops, Agropyron, Agrostis, Alopecurus, Apera, Avena, Brachiaria, Bromus, Cenchrus, Commelina, Cynodon, Cyperus, Dactyloctenium, Digitaria, Echinochloa, Eleocharis, Eleusine, Eragrostis, Eriochloa, Festuca, Fimbristylis, Heteranthera, Imperata, Ischaemum, Leptochloa, Lolium, Monochoria, Panicum, Paspalum, Phalaris, Phleum, Poa, Rottboellia, Sagittaria, Scirpus, Setaria and/or Sorghum.

Examples of dicotyledonous weeds that may be controlled according to methods of the present invention include, but are not limited to, weeds of the genera Abutilon, Amaranthus, Ambrosia, Anoda, Anthemis, Aphanes, Artemisia, Atriplex, Bellis, Bidens, Capsella, Carduus, Cassia, Centaurea, Chenopodium, Cirsium, Convolvulus, Datura,

Desmodium, Emex, Erysimum, Euphorbia, Galeopsis, Galinsoga, Galium, Hibiscus, Ipomoea, Kochia, Lamium, Lepidium, Lindernia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola and/or Xanthium.

Herbicidal application mixtures of the present invention are useful for controlling a wide variety of weeds, i.e., plants that are considered to be a nuisance or a competitor of commercially important crop plants. Examples of weeds that may be controlled according to methods of the present invention include, but are not limited to, Meadow Foxtail (*Alopecurus pratensis*) and other weed species with the *Alopecurus* genus, Common Barnyard Grass (*Echinochloa crus-galli*) and other weed species within the *Echinochloa* genus, crabgrasses within the genus *Digitaria,* White Clover (*Trifolium repens*)*,* Lambsquarters (*Chenopodium berlandieri*)*,* Redroot Pigweed *(Amaranthus retroflexus)* and other weed species within the *Amaranthus* genus, Common Purslane (*Portulaca oleracea*) and other weed species in the *Portulaca* genus, *Chenopodium album* and other *Chenopodium* spp., *Setaria lutescens* and other *Setaria* spp., *Solanum nigrum* and other *Solanum* spp., *Lolium multiflorum* and other *Lolium* spp., *Brachiaria platyphylla* and other *Brachiaria* spp., *Sorghum halepense* and other *Sorghum* spp., *Conyza Canadensis* and other *Conyza* spp., and *Eleusine indica.* In some embodiments, the weeds comprise one or more glyphosate-resistant species, 2,4-D-resistant species, dicamba-resistant species and/or ALS inhibitor herbicide-resistant species. In some embodiments, the glyphosate-resistant weed species is selected from the group consisting of *Amaranthus palmeri, Amaranthus rudis, Ambrosia artemisiifolia, Ambrosia trifida, Conyza bonariensis, Conyza canadensis, Digitaria insularis, Echinochloa colona, Eleusine indica, Euphorbia heterophylla, Lolium multiflorum, Lolium rigidum, Plantago lancelata, Sorghum halepense,* and *Urochloa panicoides.*

Although various methods discussed herein reference applying an application mixture to "a field of crop plants," it is understood that these methods can include applying the mixture to fields that are to be planted with crop plants (e.g. for pre-plant application or burndown in fallow fields). Further, even though various methods reference weeds in a "field," this term is inclusive of smaller, discrete areas, such as a pot of soil or raised bed (e.g. in a greenhouse setting).

Having described the invention in detail, it will be apparent that modifications and variations are possible without departing from the scope of the invention defined in the appended claims.

## EXAMPLES

The following non-limiting examples are provided to further illustrate the present invention. Amounts specified in the Examples are by weight unless otherwise stated.

Abbreviations and Materials used:

DAA = Days After Application
DI Water = Deionized water
DPGME = Di(propylene glycol) methyl ether
Drakeol 19 = Mineral Oil, Paraffium Liquidum
Ethoquad® 012 = 0-12 (Oleylmethylbis(2-hydroxyethyl) Ammonium Chloride (75% w/w Active) (supplier: Nouryon)
Isopar™ M = Isoparaffin fluid (supplier: ExxonMobil), $C_{11}$-$C_{16}$ isoalkanes
HLB = hydrophilic-lipophilic balance value
KP 578 = Acrylates/Ethylhexyl Acrylate/Dimethicone Methacrylate copolymer (supplier: Shin-Etsu Silicone)
Proxel®GL= 1,2-Benzisothiazol-3(2H)-one (preservative; supplier: Lonza)
Span® 80 = Sorbitan monooleate (supplier: Croda)
Steposol™ ME = Methyl oleate/Linoleate methyl ester (supplier: Stepan)
Stepfac™ 8182 = Polyoxyethylene-12, Tridecyl Alcohol Ethoxylate Phosphate Ester (supplier: Stepan)
Tween® 80 = Polysorbate 80 (polyoxyethylene sorbitan monooleate) (supplier: Croda)
wt% or wt.% = % by weight

General Procedure G1: Experimental Method for Determining the HLB value of an unknown Surfactant (to function as emulsifier for oil-in-water emulsions)

The unknown to be tested surfactant is combined in different proportions with a reference surfactant (RS), i.e., a surfactant with a known HLB value predetermined based on estimation by Griffin's method. Typically, Span® 80 (sorbitan monooleate, HLB = 4.3) and Tween® 80 (polysorbate 80; HLB = 15) are used as reference surfactant (RS).

Depending on the molecular composition of the tested surfactant (TS), if the expected HLB value of TS is high, it is combined with Span® 80. On the other hand, if the expected HLB value is low, TS is combined with Tween® 80. Oil-in-water emulsions are prepared with various mixtures of TS and the appropriate reference surfactant. The oil used in preparing the emulsions is necessarily an oil for which the HLB value required for its emulsification is known, for example, paraffin oil with the required HLB of about 10.

The composition of the emulsions prepared comprises 5 wt.% of a surfactant mixture, 15 wt.% of oil, and 80 wt.% of water. The hydrophilic (high HLB) surfactant is solubilized in water and the lipophilic surfactant (low HLB) in oil. Both water and oil phases are heated to 80°C. The oil phase is added to the water phase under high-shear agitation or homogenization. Following completion of addition of the oil phase to the water phase, homogenization is continued for about 15 minutes. The resulting emulsion is subsequently cooled to room temperature (approximately 20°C) under gentle agitation. While the emulsion is under gentle agitation for cooling, a water-soluble dye (for example, FD&C Blue Number 1) may be added to the emulsion to aid the visual evaluation of emulsion stability.

The emulsions are stored at room temperature overnight. Emulsion stability is evaluated based on the extent of creaming-induced separation observed in the emulsions. The lesser the separation, the higher the emulsion stability. The more stable emulsion contains the surfactant mixture with an HLB value of 10. The HLB value of the tested surfactant is then calculated using/solving the following equation:

$$(\text{Weight of TS} \times \text{HLB of TS} + \text{Weight of RS} \times \text{HLB of RS})/(\text{Weight of TS} + \text{Weight of RS}) = 10$$

The above method and equation is also used to calculate the HLB value of a surfactant mixture.

<u>General Procedure G2</u>: Experimental Method for Determining the HLB-requirement for a given Oil-phase (single oil or mixture of multiple oils)

Surfactants with known HLB values, for example, Tween® 80 (HLB = 15) and Span® 80 (HLB=4.3) are combined in various proportion to produce surfactant mixtures with HLB values in a given range, for example, 7 - 14. The mix-proportion for the two surfactants for obtaining a surfactant mixture with a given HLB value is determined based on the following equation.

$$HLB_{\text{Surfactant Mixture}} = HLB_{\text{Tween80}} * \text{Weight Fraction of Tween 80} + HLB_{\text{Span80}} * (1 - \text{Weight Fraction of Tween 80})$$

Oil-in-water emulsions are prepared using surfactant mixtures corresponding to various HLB values. The composition of the emulsions prepared comprises 5 wt.% of a surfactant mixture, 15 wt.% of the oil-phase, and 80 wt.% of water. The oil-phase is added to the water-phase comprising a surfactant mixture and water under high-shear agitation or homogenization. Following completion of addition of the oil-phase to the water-phase, homogenization is continued for about 15 minutes.

The resulting emulsions are stored at room temperature overnight. Emulsion samples showing lesser amounts of sedimentation (i.e., creaming or settling)-induced separation of the oil-phase, are noted based on visual observation. These emulsion samples are subsequently centrifuged at a relatively low centrifugal speed of about 500 - 2,000 rpm for about 10 - 15 minutes to identify the emulsion with maximum stability against sedimentation-induced separation. The HLB value of the surfactant mixture used in making the foregoing emulsion with maximum stability is taken as the HLB required for good emulsification of the given oil-phase.

<u>Example 1:</u> Component A

This example shows oil solution compositions for Component A in Table 1, comprising an auxin herbicide, dicamba.

<u>Table 1</u>

| **Ingredient** | Weight % | | | |
|---|---|---|---|---|
| | Oil Solution 1 | Oil Solution 2 | Oil Solution 3 | Oil Solution 4 |
| Dicamba (98.3%) | 28.48 | 44.76 | 44.76 | 61.04 |
| Castor Oil | 71.52 | 35.76 | 35.76 | 25.22 |

(continued)

| Ingredient | Weight % | | | |
|---|---|---|---|---|
| | Oil Solution 1 | Oil Solution 2 | Oil Solution 3 | Oil Solution 4 |
| Propylene Glycol | - | 19.48 | - | - |
| Hexylene Glycol | - | - | 19.48 | 13.74 |

Example 2: Mesotrione dispersions and organoclay gel compositions

The compositions shown in Tables 2a and 2b of this example are compositions suitable to be incorporated into Component A

The concentrated dispersions of mesotrione in silicone oil of Table 2a were prepared using a Retsch gyratory ball mill. Dispersions of finely-divided mesotrione solids with a mean particle size of about 5 microns in silicone oil were obtained.

Table 2a shows mesotrione dispersion compositions suitable to be incorporated into Component A.

Table 2a

| Ingredient | Dispersion 1, used in Samples **3-1** to **3-4** in Table 3a (wt%) | Dispersion 2, used in Sample **3-5** in Table 3a (wt%) | Dispersion 3, used in Samples **3-6** to **3-8** in Table 3b (wt%) |
|---|---|---|---|
| Mesotrione Tech (98.6%) | 30.40 | 30.40 | 50.71 |
| Silicone, 100 cst | 69.60 | - | 46.76 |
| Silicone, 1000 cst | - | 69.60 | - |
| KP 578 | - | - | 2.54 |

The Organoclay Gels of Table 2b were prepared by melting PEG-30 Dipolyhydroxystearate (waxy solid) by heating it to about 60°C. An appropriate amount of acetochlor or castor oil was weighed out in a suitable vessel, and subsequently held under agitation using a dispersion-blade agitator (to ensure high-shear agitation). Then, an appropriate amount of molten PEG-30 Dipolyhydroxystearate was added to acetochlor or castor oil under strong agitation to produce a homogeneous solution. Subsequently, an appropriate amount of Organoclay (solid) was added to the foregoing solution under strong agitation, and mixing was continued for a period of time. Finally, propylene carbonate was added to respective mixture under agitation and mixing was continued for a period of time. The resulting mixture was sheared using a rotor-stator homogenizer (Silverson homogenizer) for a period of time during which the foregoing mixture attained a viscous, gel-like consistency.

Table 2b shows organoclay gel compositions suitable to be incorporated into Component A.

Table 2b

| Ingredient | **Organoclay Gel 1**, used in Samples **3-1** to **3-5**, and 3-7 in Tables 3a and 3b (wt%) | **Organoclay Gel 2**, used in Samples **3-6** and **3-8** in Table 3b (wt%) |
|---|---|---|
| Organoclay (97.5%) | 6.15 | 7.69 |
| Acetochlor (95.4%) | 88.81 | - |
| Castor Oil | - | 86.01 |
| PEG-30 Dipolyhydroxystearate | 3.60 | 4.50 |
| Propylene Carbonate | 1.44 | 1.80 |

Example 3: Component A

This example shows oil-in-oil emulsion based compositions for Component A.

The respective dispersion of finely-divided mesotrione solids in silicone oil (Table 2a) was subsequently emulsified in the oil-continuous phase comprising i) an oily herbicide, namely acetochlor, and ii) a solution of dicamba acid in castor oil, containing 28 wt.% of dicamba acid. The oil-in-oil emulsion was produced using a dispersion blade agitator. An organoclay-based rheology-modifier was used as the suspending agent, which was added to the respective formulation samples as a organoclay gel in either acetochlor (Organoclay Gel 1) or castor oil (Organoclay Gel 2). The respective compositions for the mesotrione dispersions used are given in Table 2a, and the respective compositions for the organoclay gels used are given in Table 2b.

Table 3a shows oil-in-oil emulsion based compositions for Component A, comprising three herbicidal actives acetochlor, dicamba, and mesotrione.

Table 3a

| Ingredient | Weight % | | | | |
|---|---|---|---|---|---|
| | **Sample 3-1** | **Sample 3-2** | **Sample 3-3** | **Sample 3-4** | **Sample 3-5** |
| Acetochlor (95.4%) | 34.59 | 33.02 | 31.45 | 29.87 | 34.59 |
| Dicamba (98.3%) | 11.19 | 10.68 | 10.17 | 9.66 | 11.19 |
| Mesotrione (98.6%) | 3.14 | 3.00 | 2.86 | 2.71 | 3.14 |
| Silicone Oil | 7.19 | 6.87 | 6.54 | 6.21 | 7.19 |
| Organoclay Gel 1 | 1.81 | 1.82 | 1.83 | 1.84 | 1.81 |
| PEG-30 Dipolyhydroxystearate | 1.06 | 1.06 | 1.07 | 1.07 | 1.06 |
| Propylene Carbonate | 0.42 | 0.43 | 0.43 | 0.43 | 0.42 |
| Castor Oil | 28.10 | 30.56 | 33.02 | 35.52 | 28.10 |
| Drakeol 19 | 12.50 | 12.56 | 12.63 | 12.69 | 12.50 |

Table 3b shows oil-in-oil emulsion based compositions for Component A, comprising three herbicidal actives acetochlor, dicamba, and mesotrione, and safener cyprosulfamide.

Table 3b

| Ingredient | Weight % | | |
|---|---|---|---|
| | **Sample 3-6** | **Sample 3-7** | **Sample 3-8** |
| Acetochlor (95.4%) | 34.59 | 37.74 | 37.74 |
| Dicamba (98.3%) | 11.19 | 9.16 | 9.16 |
| Mesotrione (98.6%) | 3.14 | 3.48 | 3.48 |
| Silicone Oil | 2.90 | 3.20 | 3.20 |
| KP 578 | 0.16 | 0.17 | 0.17 |
| Organoclay Gel 1 | - | 1.21 | - |
| Organoclay Gel 2 | 1.45 | - | 1.44 |
| PEG-30 Dipolyhydroxystearate | 0.85 | 0.71 | 0.84 |
| Propylene Carbonate | 0.34 | 0.28 | 0.34 |
| Castor Oil | 44.28 | 29.86 | 42.43 |
| Drakeol 19 | - | 12.99 | - |
| Cyprosulfamide | 1.10 | 1.20 | 1.20 |

Table 3c shows oil-in-oil emulsion based compositions for Component A, comprising three herbicidal actives

acetochlor, dicamba, and mesotrione or tembotrione, and safener cyprosulfamide.

Table 3c

| Ingredient | Weight % | | |
|---|---|---|---|
| | Sample 3-9 | Sample 3-10 | Sample 3-11 |
| Acetochlor (95.4%) | 38.3 | 44.55 | 38.67 |
| Dicamba (98.3%) | 8.26 | 9.61 | 8.34 |
| Mesotrione (98.6%) | 3.09 | 3.59 | - |
| Tembotrione (98.8%) | - | - | 2.67 |
| Silicone Oil | 2.85 | 3.31 | 2.46 |
| KP 578 | 0.15 | 0.18 | 0.13 |
| Organoclay Gel | 1.02 | 1.01 | 1.03 |
| PEG-30 Dipolyhydroxystearate | 0.66 | 0.66 | 0.66 |
| Propylene Carbonate | 0.24 | 0.24 | 0.24 |
| Castor Oil | 32.16 | 35.43 | 32.45 |
| Drakeol 19 | 12.05 | - | 12.12 |
| Cyprosulfamide | 1.22 | 1.42 | 1.23 |

Example ME: Manufacturing processes for microemulsion compositions of Component B

Microemulsion compositions of Component B without cationic guar gum were prepared by placing the appropriate amount of the respective ingredients in a suitable vessel. The composition was mixed using an agitator fitted to a Caframo® mixer until the composition turned into a transparent, single-phase (Winsor Type IV) microemulsion.

For the preparation of microemulsion compositions of Component B with cationic guar gum two different stock solutions containing cationic guar gum were prepared.

A concentrated stock solution (CSS1) of cationic guar gum was prepared by slowly adding cationic guar gum polymer solids to a mixture of deionized water and Proxel GXL (preservative) under strong agitation with a Jiffy® blade agitator fitted to an overhead Caframo® mixer. Agitation was continued for a period of time to ensure good dispersion of the cationic guar gum solids. Subsequently, an 85% (w/w) solution of phosphoric acid was added to the foregoing polymer mixture to effect hydration of the polymer solids, as indicated by the polymer mixture attaining a viscous consistency rapidly upon the addition of phosphoric acid. The cationic guar gum polymer concentration in the resulting solution was about 4% by weight.

A stock solution (StS2) comprising mixture of cationic guar gum and potassium acetate was prepared by weighed out in a suitable vessel the appropriate amounts of the foregoing concentrated stock solution CSS1, hexylene glycol, and deionized water, and subsequently mixed using a Jiffy® blade agitator fitted to an overhead Caframo® mixer to produce a homogeneous composition. To the resulting composition was added potassium acetate as solid, and agitation was continued until the solids had dissolved completely (see Example 6).

Microemulsion compositions of Component B with cationic guar gum were prepared by placing the appropriate amount of the above-mentioned stock solution (StS2) and the respective other ingredients in a suitable vessel. The composition was mixed using an agitator fitted to a Caframo® mixer until the composition turned into a transparent, single-phase (Winsor Type IV) microemulsion.

The following Examples 4 to 9 show compositions suitable as Component B of a kit according to the present invention.

Example 4: Component B

This example shows microemulsion compositions for Component B.

The component B microemulsions comprising constituent b1a-1) as oily DRA such as Steposol ME and/or Isopar M are shown in Tables 4a, 4b and 4c. These compositions further comprise as constituent b2) an anionic surfactant such as Stepfac 8182 or a mixture of the anionic surfactant and a nonionic surfactant such as Stepan agent 1690-92N. These compositions further comprise potassium acetate (KOAc) as constituent b1b-1).

These compositions are optically transparent, homogenous mixtures of an oil phase and a water phase, which are referred to in the art as microemulsions. They comprise either an anionic surfactant (Stepfac 8182) which is a phosphate ester of an alkyl polyethoxyethanol (polyoxyethylene (12) monotridecyl ether phosphate), or a mixture of the said anionic surfactant and a nonionic surfactant (Stepan Agent 1690-92N) which is a butylated block-copolymer of ethylene oxide and propylene oxide. The molarity of the aqueous phase, which is equal to the ionic strength for a solution of a monovalent salt such as potassium acetate, can be relatively high, in the order of about 5 — 10 Molar. These Component B compositions also comprise dipotassium phosphate as pH-buffering agent and sodium hydroxide as neutralizing agent, each in the form of aqueous solution. These compositions further comprise substantially water-immiscible oils such as an oily ester, Steposol ME (Methyl Oleate/Linoleate Methyl Ester), and a paraffinic hydrocarbon such as Isopar M.

A notable feature of these compositions is that, even though they contain a relatively high loading of an ionic surfactant (Stepfac 8182), together with a relatively high loading of electrolyte (Potassium Acetate, Dipotassium Phosphate, Sodium Hydroxide) solution having a relatively high ionic strength, the compositions still are non-gelling compositions with a pourable or pumpable consistency. Ordinarily, under the compositional parameters noted above, gelling is an expected outcome due to the formation of structurally complex surfactant aggregates, for example, cylindrical micelles. These microemulsion compositions preferably show physical stability over a wide range of temperature, for example from -20°C to 54°C.

Table 4a shows microemulsion compositions for Component B

Table 4a

| Sample No. | Steposol ME (wt%) | Isopar M (wt%) | Hexylene Glycol (wt%) | Stepfac 8182 (wt%) | 50 wt.% solution of NaOH in Water | 50 wt.% solution of KOAc in Water | 70 wt.% solution of KOAc in Water | 50 wt.% solution of Dipotassium Phosphate in Water |
|---|---|---|---|---|---|---|---|---|
| **B1** | 6.98 | 13.96 | - | 20.94 | 2.30 | - | 48.84 | 6.98 |
| **B2** | 6.90 | 13.79 | 1.17 | 20.69 | 2.28 | - | 48.27 | 6.90 |
| **B3** | 6.90 | 13.79 | 1.17 | 20.69 | 2.28 | - | 41.38 | 13.79 |
| **B4** | 6.90 | 13.79 | 1.17 | 20.69 | 2.28 | - | 34.48 | 20.69 |
| **B5** | 8.28 | 12.41 | 1.17 | 20.69 | 2.28 | - | 34.48 | 20.69 |
| **B6** | 5.17 | 15.52 | 1.17 | 20.69 | 2.28 | - | 34.48 | 20.69 |
| **B7** | 23.60 | - | 5.11 | 23.60 | - | 47.69 | - | - |
| **B8** | 23.94 | - | 5.27 | 22.43 | 0.48 | 47.88 | - | - |
| **B9** | - | 22.88 | - | 22.88 | - | - | 30.98 | 23.26 |

Table 4b shows microemulsion compositions for Component B

Table 4b

| Sample No. | Steposol ME (wt%) | Isopar M (wt%) | Hexylene Glycol (wt%) | DPGME (wt%) | Stepfac 8182 (wt%) | 50 wt.% solution of NaOH in Water | 70 wt.% solution of KOAc in Water | 50 wt.% solution of Dipotassium Phosphate in Water |
|---|---|---|---|---|---|---|---|---|
| **B10** | 7.63 | 11.45 | - | 2.67 | 15.27 | 1.91 | 57.25 | 3.82 |
| **B11** | 6.94 | 10.42 | - | 2.55 | 13.89 | 1.77 | 57.87 | 6.56 |
| **B12** | 6.76 | 10.14 | - | 2.55 | 13.51 | 1.80 | 57.21 | 8.03 |
| **B13** | 4.74 | 14.74 | 3.16 | 5.26 | 26.32 | 3.68 | 31.57 | 10.53 |
| **B14** | 4.76 | 14.81 | 2.65 | 5.29 | 26.46 | 3.70 | 31.75 | 10.58 |
| **B15** | 4.05 | 12.60 | 2.25 | 4.50 | 29.25 | 4.05 | 34.30 | 9.00 |
| **B17** | 4.09 | 12.72 | 2.27 | 3.63 | 29.52 | 4.09 | 34.60 | 9.08 |

(continued)

| Sample No. | Steposol ME (wt%) | Isopar M (wt%) | Hexylene Glycol (wt%) | DPGME (wt%) | Stepfac 8182 (wt%) | 50 wt.% solution of NaOH in Water | 70 wt.% solution of KOAc in Water | 50 wt.% solution of Dipotassium Phosphate in Water |
|---|---|---|---|---|---|---|---|---|
| **B18** | 4.23 | 13.15 | 2.35 | 4.70 | 30.53 | 4.23 | 35.78 | 5.03 |

Table 4c shows microemulsion compositions for Component B

Table 4c

| Sample No. | Steposol ME (wt%) | Isopar M (wt%) | Hexylene Glycol (wt%) | DPGME (wt%) | Stepfac 8182 (wt%) | Stepan Agent 1690-92N | 50 wt.% solution of NaOH in Water | 70 wt.% solution of KOAc in Water | 50 wt.% solution of Dipotassium Phosphate in Water |
|---|---|---|---|---|---|---|---|---|---|
| **B19** | 3.80 | 11.82 | 2.53 | 4.22 | 27.45 | 8.45 | 3.89 | 32.18 | 5.66 |
| **B20** | 3.61 | 11.23 | 2.53 | 4.01 | 26.07 | 12.03 | 3.61 | 34.30 | 2.61 |
| **B21** | 3.47 | 10.80 | 2.43 | 3.86 | 25.07 | 11.57 | 3.47 | 34.32 | 5.01 |
| **B22** | 3.33 | 10.36 | 2.33 | 3.70 | 24.05 | 15.91 | 2.96 | 34.40 | 2.96 |
| **B23** | 6.80 | 10.20 | - | 2.57 | 18.13 | - | 1.89 | 45.30 | 15.11 |

Example 5: Component B

This example shows compositions for Component B in the form of aqueous solutions

Appropriate amounts of the concentrated stock solution CSS1 of cationic guar gum polymer described in Example ME above, deionized water, emulsifying surfactant (i.e., Stepfac 8182 or Ethoquad 012), and optionally potassium acetate (used as 70 wt.% solution in water), were placed in a suitable vessel and mixed using an agitator until a visibly homogeneous composition was obtained.

Component B aqueous solution compositions comprising cationic guar gum as polymeric DRA (constituent b1a-2)) are shown in Table 5. Stepfac 8182 and Ethoquad 012 were used as emulsifying surfactants (constituent b2)). These compositions may further comprise potassium acetate (KOAc) as constituent b1b-1).

Table 5 shows Component B compositions in the form of aqueous solutions

Table 5

| Ingredient | Sample S1 (wt%) | Sample S2 (wt%) | Sample S3 (wt%) | Sample S4 (wt%) |
|---|---|---|---|---|
| Cationic Guar Gum | 1.00 | 1.00 | 1.00 | 1.00 |
| Proxel GL | 0.04 | 0.04 | 0.04 | 0.04 |
| 85% w/w Phosphoric Acid | 0.04 | 0.04 | 0.04 | 0.04 |
| Potassium Acetate | - | - | 20.00 | 20.00 |
| Stepfac 8182 | 7.5 | - | 8.00 | - |
| Ethoquad 012 (75% w/w Active) | - | 10.00 | - | 10.00 |
| DI Water | 91.42 | 88.92 | 70.92 | 68.92 |

Example 6: Mixtures without emulsifying surfactants suitable for producing Component B compositions comprising cationic guar gum and potassium acetate

The mixtures shown in Table 6 of this example comprise cationic guar gum (polymeric DRA) and potassium acetate (KOAc) as volatility control agent. These mixtures are compositions suitable to be incorporated into Component B.

Table 6

| Ingredient | Mix 1 (wt%) | Mix 2 (wt%) | Mix 3 (wt%) |
|---|---|---|---|
| Cationic Guar Gum | 1.112 | 1.152 | 1.015 |
| Proxel GL | 0.044 | 0.046 | 0.041 |
| 85% w/w Phosphoric Acid | 0.044 | 0.046 | 0.041 |
| Potassium Acetate | 48.633 | 50.381 | 50.431 |
| Hexylene glycol | 6.937 | 3.592 | 3.608 |
| DI Water | 43.230 | 44.783 | 44.864 |

Example 7: Component B in the form of single-phase Winsor Type IV microemulsions

The examples shown in Tables 7a and 7b are single-phase Winsor Type IV microemulsions useful as Component B of a kit according to the present invention. These microemulsions were flowable at 25°C.

Table 7a shows single-phase Winsor Type IV Component B microemulsions

Table 7a

| Ingredient | **B7-S1** (g) | B7-S2 (g) | B7-S3 (g) | B7-S4 (g) |
|---|---|---|---|---|
| Steposol ME | 0.91 | 0.90 | 0.90 | 0.90 |
| Isopar M | 2.82 | 2.40 | 2.40 | 2.40 |
| Hexylene Glycol | - | - | 0.61 | 0.61 |

(continued)

| Ingredient | **B7-S1** (g) | **B7-S2 (g)** | **B7-S3 (g)** | **B7-S4 (g)** |
|---|---|---|---|---|
| Stepfac 8182 | 10.00 | 12.00 | 12.00 | 12.00 |
| Mix 1, Table 6 | 11.20 | - | - | - |
| Mix 3, Table 6 | - | 11.00 | 12.00 | 11.15 |
| Total | 24.93 | 26.30 | 27.91 | 27.06 |

Table 7b shows single-phase Winsor Type IV Component B microemulsions

Table 7b

| Ingredient | B7-S5 (g) | B7-S6 (g) | B7-S7 (g) | B7-S8 (g) |
|---|---|---|---|---|
| Steposol ME | 0.90 | 0.90 | 0.90 | 0.90 |
| Isopar M | 2.40 | 2.40 | 2.40 | 2.40 |
| Hexylene Glycol | 1.20 | 1.80 | 2.40 | 2.45 |
| Stepfac 8182 | 12.00 | 12.00 | 13.07 | 12.00 |
| 70% w/w Potassium Acetate in water | - | - | 0.98 | 0.98 |
| Mix 2, Table 6 | - | - | 11.00 | 9.70 |
| Mix 3, Table 6 | 11.00 | 11.04 | - | - |
| Total | 27.50 | 28.14 | 30.75 | 28.43 |

Example 8: Component B in the form of single-phase Winsor Type IV microemulsions

The examples shown in Tables 8a and 8b are single-phase Winsor Type IV microemulsions useful as Component B of a kit according to the present invention. These microemulsions were flowable at 25°C.

Table 8a shows single-phase Winsor Type IV Component B microemulsions

Table 8a

| Phase | **Ingredient** | **B8-S1** (wt%) | **B8-S2** (wt%) | **B8-S3** (wt%) | **B8-S4** (wt%) |
|---|---|---|---|---|---|
| Oil | Steposol ME | 3.65 | 3.42 | 3.22 | 3.33 |
| Oil | Isopar M | 11.31 | 9.13 | 8.60 | 8.87 |
| Oil | Hexylene Glycol | 3.12 | 1.51 | 3.74 | 3.74 |
| Surfactant | Stepfac 8182 | 40.11 | 45.62 | 42.99 | 44.33 |
| Water | Potassium Acetate | 21.85 | 21.09 | 21.68 | 20.78 |
| Water | Cationic Guar Gum | 0.50 | 0.42 | 0.44 | 0.42 |
| Water | Proxel GL | 0.02 | 0.02 | 0.02 | 0.02 |
| Water | Phosphoric Acid | 0.02 | 0.02 | 0.02 | 0.02 |
| Water | DI Water | 19.42 | 18.77 | 19.29 | 18.49 |
| Total | | 100.00 | 100.00 | 100.00 | 100.00 |
| | Viscosity*, cps (100 rpm of spindle #6) | 4140 | 2790 | 1650 | 1970 |
| Viscosity*: viscosity was measured at 25°C using a Brookfield viscometer LV | | | | | |

Table 8b shows single-phase Winsor Type IV Component B microemulsions

Table 8b

| Phase | **Ingredient** | **B8-S5** (wt%) | **B8-S6** (wt%) | **B8-S7** (wt%) | **B8-S8** (wt%) |
|---|---|---|---|---|---|
| Oil | Steposol ME | 3.27 | 3.20 | 2.93 | 3.17 |
| Oil | Isopar M | 8.73 | 8.53 | 7.80 | 8.44 |
| Oil | Hexylene Glycol | 5.81 | 7.81 | 9.09 | 9.84 |
| Surfactant | Stepfac 8182 | 43.62 | 42.63 | 42.48 | 42.21 |
| Water | Potassium Acetate | 20.17 | 19.79 | 20.27 | 19.60 |
| Water | Cationic Guar Gum | 0.41 | 0.40 | 0.41 | 0.39 |
| Water | Proxel GL | 0.02 | 0.02 | 0.02 | 0.02 |
| Water | Phosphoric Acid | 0.02 | 0.02 | 0.02 | 0.02 |
| Water | DI Water | 17.95 | 17.60 | 16.98 | 16.31 |
| Total | | 100.00 | 100.00 | 100.00 | 100.00 |
| | Viscosity*, cps (100 rpm of spindle #6) | 1690 | 1620 | 1580 | 1290 |
| Viscosity*: viscosity was measured at 25°C using a Brookfield viscometer LV | | | | | |

Example 9: Component B in the form of macroemulsions

The examples shown in Table 9 are macroemulsions useful as Component B of a kit according to the present invention.

To produce the macroemulsions shown in Table 9, appropriate amounts of the concentrated stock solution CSS1 of cationic guar gum polymer described in Example ME above, deionized water, emulsifying surfactants (i.e., Tween 80, Span 80), and potassium acetate (used as 70 wt.% solution in water) were weighed out in a suitable vessel, and mixed using a dispersion-blade agitator (to ensure high-shear agitation) until a visibly homogeneous composition was produced as the water-phase of the said macroemulsion. Separately, appropriate amounts of Steposol ME and Isopar M were combined in a suitable vessel and mixed using an agitator to produce the oil-phase of the said macroemulsion. With the water-phase kept under agitation using a dispersion-blade agitator, the oil-phase was slowly added to the water-phase. Upon completion of addition of the oil-phase to the water-phase, agitation was continued for a period of time in producing the desired macroemulsions useful as Component B.

Table 9 shows Components B in the form of macroemulsions

Table 9

| **Ingredient** | **B9-S1** (wt%) | **B9-S2** (wt%) | **B9-S3** (wt%) | **B9-S4** (wt% |
|---|---|---|---|---|
| Steposol-ME | 5.00 | 5.00 | 5.00 | 5.00 |
| Isopar-M | 13.19 | 13.19 | 13.19 | 13.19 |
| Tween 80 | 1.65 | 3.3 | 6.6 | 3.3 |
| Span 80 | 1.35 | 2.7 | 5.4 | 2.7 |
| Cationic Guar Gum | 0.50 | 0.50 | 0.50 | 0.75 |
| Proxel GL | 0.02 | 0.02 | 0.02 | 0.03 |
| 85% w/w Phosphoric Acid | 0.02 | 0.02 | 0.02 | 0.03 |
| Potassium Acetate | 20.02 | 20.02 | 20.02 | 20.02 |
| DI Water | 58.25 | 55.25 | 49.25 | 54.98 |
| Total | 100.00 | 100.00 | 100.00 | 100.00 |

Example 10: Application mixture and weed-control efficacy (field testing)

Application mixtures (spray solutions) were prepared by mixing Component A and Component B together with an appropriate amount of water, conforming to an application rate of 140 liters of spray solution per hectare (ha) of (farm)land. Preferred methods of preparing application mixtures from a kit according to the present invention are described as Method 1 and Method 2 below.

Method 1: Appropriate amounts of Component A and Component B are weighed out in a suitable vessel and mixed using an agitator. Subsequently, about 30% by weight of the total amount of water required for preparing the application mixture is added to the foregoing mixture and the resulting mixture is mixed using an agitator. The remaining amount of water is then added to the mixture and mixing is continued for a period of time to obtain a homogeneous application mixture.

Method 2: About 30% by weight of the total amount of water required for preparing the application mixture, and the appropriate amount of Component B are weighed out in a suitable vessel and mixed using an agitator. Subsequently, the appropriate amount of Component A is added to the foregoing mixture and the resulting mixture is mixed using an agitator. The remaining amount of water is then added to the mixture and mixing is continued for a period of time to obtain a homogeneous application mixture.

The examples shown in Table 10a (Component A) and Table 10b (Component B) are suitable Components of a kit according to the present invention. Table 10c and Table 10d show the weed-control efficacy results of application mixtures produced from the Component A and Component B compositions shown in Table 10a and Table 10b.

Table 10a shows the composition of a suitable Component A

Table 10a

| Ingredient | Wt.% |
|---|---|
| Acetochlor (96%) | 37.736 |
| Dicamba (98.3%) | 9.156 |
| Mesotrione (98.6%) | 3.476 |
| Silicone Oil, 100 cst (Dimethicone) | 3.205 |
| KP 578 | 0.174 |
| Organoclay Gel (thickener) | 1.395 |
| PEG-30 Dipolyhydroxystearate | 0.877 |
| Propylene Carbonate | 0.327 |
| Castor Oil | 42.454 |
| Cyprosulfamide | 1.200 |

Table 10b shows the composition of a suitable Component B

Table 10b

| Ingredient | Wt.% |
|---|---|
| Steposol-ME | 3.610 |
| Isopar-M | 11.231 |
| Hexylene Glycol | 2.527 |
| DPGME | 4.011 |
| Stepfac 8182 | 26.073 |
| Stepan Agent 1690-92N | 12.034 |
| 50 wt.% solution of NaOH in Water | 3.610 |
| 70 wt.% solution of KOAc in Water | 34.297 |
| 50 wt.% solution of Dipotassium Phosphate in Water | 2.607 |

For comparison, a tank-mix prepared with Harness® (a commercial product from Bayer containing acetochlor as the only active ingredient), Callisto® (a commercial product from Syngenta containing mesotrione as the only active ingredient), and XtendiMax® (a commercial product from Bayer containing dicamba as the only active ingredient, was also tested under the same conditions (referred to in Tables 10c and 10d as "Comparison").

Table 10c shows the pre-emergence average dicotyledonous (Dicot) weed-control efficacy results of application mixtures produced from the Component A and Component B compositions shown in Table 10a and Table 10b above.

Table 10c

| **Sample** | Ratio by weight Comp. A to Comp. B | Acetochlor g/ha | Dicamba g/ha | Mesotrione g/ha | Dicot 28DAA | Dicot 42DAA |
|---|---|---|---|---|---|---|
| Comp. A + Comp. B | 1.7 | 1260 | 315 | 120 | 99% | 89% |
| Comp. A + Comp. B | 1.1 | 1260 | 315 | 120 | 96% | 80% |
| Comparison | - | 1260 | 315 | 120 | 99% | 74% |

Table 10d shows the post-emergence average monocotyledonous (Mono) and dicotyledonous (Dicot) weed-control efficacy results of application mixtures produced from the Component A and Component B compositions shown in Table 10a and Table 10b above.

Table 10d

| **Sample** | Ratio by weight Comp. A to Comp. B | Acetochlor g/ha | Dicamba g/ha | Mesotrione g/ha | Dicot 14DAA | Mono 14DAA |
|---|---|---|---|---|---|---|
| Comp. A + Comp. B | 1.1 | 1260 | 315 | 120 | 89% | 34% |
| Comparison | - | 1260 | 315 | 120 | 89% | 26% |
| Comp. A + Comp. B* | 1.1 | 1260 | 315 | 120 | 95% | 95% |
| Comparison* | - | 1260 | 315 | 120 | 95% | 97% |
| *: Upon tank-mixing with Glyphosate at 1260 g/ha | | | | | | |

## Claims

1. A kit for preparing an agronomic application mixture comprising or consisting of two physically separate compositions in the form of Component A and Component B, wherein

   Component A is a composition substantially immiscible with water at 20°C comprising as constituent a1) one or more herbicidal active ingredients having a solubility in deionized water at a pH of 7 at 20°C of 25 g or less per 1000 g of water,
   and
   Component B is a composition comprising

      as constituent b1) one or more offsite movement controlling agents for herbicidal active ingredients, and
      as constituent b2) one or more amphiphilic compounds wherein the hydrophilic-lipophilic balance (HLB) value of the amphiphilic compound or the mixture of amphiphilic compounds is equal to or greater than 6, wherein constituent b2) is different from constituent b1),

   wherein constituents b1) and b2) each are different from constituent a1) of Component A.

2. The kit of claim 1, wherein the amount of constituent a1) in Component A is in the range of from about 15 wt.% to about 99 wt.%, preferably in the range of from about 15 wt.% to about 97 wt.%, in each case based on the total

weight of Component A.

3. The kit of claim 1 or 2, wherein Component A is in the form of an oil solution, an oil-continuous dispersion, and mixtures thereof.

4. The kit of any one of claims 1 to 3, wherein Component A further comprises a constituent a2) one or more oily substances, wherein constituent a2) is different from constituent a1).

5. The kit of claim 4, wherein constituent a2) of Component A comprises or consist of one or more oily substances selected from the group consisting of triglycerides, aliphatic hydrocarbons, silicone oils, fatty alcohols, fatty esters, fatty amides, fatty aldehydes, fatty ketones, aromatic solvents, chlorinated solvents, and mixtures thereof.

6. The kit of any one of claims 1 to 5, wherein Component A further comprises constituent a3), wherein constituent a3) comprises or consists of one or more substances selected from the group consisting of constituents a3-1) to a3-4):

a3-1) organic solvents, wherein constituent a3-1) is different from constituents a1) and a2),
a3-2) organic polymers and surfactants having a hydrophilic-lipophilic balance (HLB) value of lower than 6, wherein constituent a3-2) is different from constituents a1), a2) and a3-1),
a3-3) rheology modifiers, wherein constituent a3-3) is different from constituents a1), a2), a3-1) and a3-2), and
a3-4) polymeric drift retarding agents having a molecular weight of 100000 Dalton or more, wherein constituent a3-4) is different from constituents a1), a2), a3-1), a3-2) and a3-3).

7. The kit of any one of claims 1 to 6, wherein Component A comprises surfactants having a hydrophilic-lipophilic balance (HLB) value of equal to or greater than 6 in a total amount of 0 to about 1% by weight, based on the total weight of Component A.

8. The kit of any one of claims 1 to 7, wherein constituent b1) of Component B is selected from the group consisting of constituent b1a) drift retarding agents (DRAs), constituent b1b) volatility control agents, and mixtures thereof, wherein constituents b1a) and b1b) each are different from constituent a1) of Component A and from constituent b2) of Component B.

9. The kit of any one of claims 1 to 8, wherein

constituent b1) of Component B comprises or consists of constituent b1a-1) oily drift retarding agents substantially insoluble in water (oily DRAs) selected from the group consisting of fatty acid esters, triglycerides, vegetable oils, fatty alcohols, silicone oils, fatty esters, fatty amides, fatty aldehydes, fatty ketones, aromatic solvents, chlorinated solvents, aliphatic hydrocarbons and aromatic hydrocarbons, and mixtures thereof
and/or
constituent b1) of Component B comprises or consists of constituent b1a-2) polymeric drift retarding agents (polymeric DRAs), preferably selected from the group consisting of polysaccharides, polyacrylamides, polyethylene oxides, polysulfonates, polysulfates, polyvinylpyrrolidones, polyvinyl alcohols, polyacrylates, polymers and copolymers of acrylic acid or methacrylic acid, vinyl polymer, poly(2-acrylamido-2-methyl-1-propanesulfonic acid), poly(diallyldimethylammonium chloride), and mixtures thereof.

10. The kit of any one of claims 1 to 9, wherein Component B comprises one or more substances of constituent b1b) selected from the group consisting of constituents b1b-1), b1b-2) and b1b-12):

b1b-1) salts of $C_1$-$C_{10}$ monocarboxylic acids, and
b1b-2) non-amphiphilic $C_2$-$C_6$ alkyl, preferably $C_2$-$C_4$ alkyl, quarternary ammonium compounds,
and
b1b-12) wherein said constituent b1b-12) is (i) a volatility control agent for herbicidal active ingredients and (ii) an amphiphilic compound with a hydrophilic-lipophilic balance (HLB) value of equal to or greater than 6, preferably in the range of from about 7 to about 18, wherein constituent b1b-12) is different from constituent b2) of Component B.

11. The kit of any one of claims 1 to 10, wherein Component B is in the form of an aqueous solution, an oil solution, an oil dispersion, a water-continuous emulsion, an oil-continuous emulsion, an oil-continuous suspension, a water-continuous microemulsion, an oil-continuous microemulsion, a bi-continuous microemulsion, and mixtures thereof,

and
wherein the ratio by weight of Component A to Component B is in the range of from about 1 : 10 to about 20 : 1

**12.** A method for producing an application mixture, comprising the steps of providing

Component A as defined in any one of claims 1 to 7,
Component B as defined in any one of claims 1 and 8 to 11, and

water,
and mixing Component A, Component B and water until a homogeneous aqueous herbicide application mixture is obtained.

**13.** A method or an use for controlling undesired vegetation, the method or use comprising applying to the field an application mixture obtained from a kit according to any one of claims 1 to 11 or obtained according to a method of claim 12.

**14.** Use of the kit of any one of claims 1 to 11 for producing an application mixture.

**15.** A composition suitable to be used as Component B as defined in any one of claims 1 and 8 to 11, comprising the following constituents

as constituent b1) one or more drift retarding agents (DRAs) selected from the group consisting of aliphatic hydrocarbons, preferably paraffinic hydrocarbons, and aromatic hydrocarbons,
as constituent b2) one or more emulsifying surfactants having a hydrophilic-lipophilic balance (HLB) value of equal to or greater than 6, preferably in the range of from about 7 to about 18,

and at least one constituent selected from the group consisting of constituents b3-1) and b3-2):

constituent b3-1) volatility control agents,
constituent b3-2) pH-buffering agents, preferably dipotassium phosphate,

wherein Component B preferably is free of herbicidal active ingredients.

Europäisches Patentamt
European Patent Office
Office européen des brevets

# EUROPEAN SEARCH REPORT

Application Number
EP 21 20 2518

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/186182 A1 (EXACTO INC [US]; SEXTON FRANKLIN E [US] ET AL.) 17 September 2020 (2020-09-17) * paragraphs [0061] - [0076], [0079] * | 1-15 | INV. A01N37/26 A01N37/40 A01N41/06 A01N41/10 A01N57/20 A01P13/00 A01N25/30 A01N25/06 |
| X | US 2018/055045 A1 (BAUR PETER [DE] ET AL) 1 March 2018 (2018-03-01) * paragraphs [0140], [0148]; tables 2, 6 * | 1-15 | |
| X | US 2020/236929 A1 (COLBY CHRISTINE M [US] ET AL) 30 July 2020 (2020-07-30) * paragraphs [0108], [0115] - [0120]; examples 31-41 * | 1-15 | |
| X | US 2015/296772 A1 (OLDS MELISSA GAIL [US] ET AL) 22 October 2015 (2015-10-22) * paragraphs [0033], [0055]; table 1 * | 1,8,9, 11-14 | |
| X | US 2006/180677 A1 (MCMANIC GREG M [US] ET AL) 17 August 2006 (2006-08-17) * paragraphs [0013], [0021]; table 3 * | 15 | TECHNICAL FIELDS SEARCHED (IPC) |
| A | Valent: "Select Max SDS", msdsdigital, 4 September 2015 (2015-09-04), pages 1-11, XP55904669, Retrieved from the Internet: URL:https://www.msdsdigital.com/select-max-herbicide-msds [retrieved on 2022-03-23] * page 2, paragraph 3 * | 1-15 | A01N A01P |

-/--

The present search report has been drawn up for all claims

3

| Place of search | Date of completion of the search | Examiner |
|---|---|---|
| Munich | 29 March 2022 | Sawicki, Marcin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 21 20 2518

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Helena: "BARRAGE HF - MSDS", msdsdigital.com, 26 March 2009 (2009-03-26), pages 1-4, XP55904662, Retrieved from the Internet: URL:https://www.msdsdigital.com/barrage-hf-msds [retrieved on 2022-03-23] * page 1, paragraph III * ----- | 1-15 | |
| A | Hektas: "Ester'H SDS", hektas.com, 13 December 2016 (2016-12-13), pages 1-7, XP55904676, Retrieved from the Internet: URL:https://hektas.com.tr/wp-content/uploads/Documents/ghs-en/ester'h-güvenlikbilgiformu-eng.pdf [retrieved on 2022-03-23] * pages 2-3, paragraph 3.2 * ----- | 1-15 | |
| A | Winfield: "SECTION THREE HERBICIDE SDS", cdms.net, 5 December 2016 (2016-12-05), pages 1-9, XP55904671, Retrieved from the Internet: URL:http://www.cdms.net/ldat/mpC0H005.pdf [retrieved on 2022-03-23] * page 2 * ----- | 1-15 | TECHNICAL FIELDS SEARCHED (IPC) |

The present search report has been drawn up for all claims

| Place of search | Date of completion of the search | Examiner |
|---|---|---|
| Munich | 29 March 2022 | Sawicki, Marcin |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 21 20 2518

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2022

| Patent document cited in search report | Publication date | Patent family member(s) | Publication date |
|---|---|---|---|
| WO 2020186182 A1 | 17-09-2020 | AU 2020235128 A1 | 07-10-2021 |
| | | CA 3132992 A1 | 17-09-2020 |
| | | WO 2020186182 A1 | 17-09-2020 |
| US 2018055045 A1 | 01-03-2018 | AU 2016227625 A1 | 24-08-2017 |
| | | BR 112017018371 A2 | 17-04-2018 |
| | | CN 107426995 A | 01-12-2017 |
| | | EP 3064062 A1 | 07-09-2016 |
| | | EP 3264894 A1 | 10-01-2018 |
| | | US 2018055045 A1 | 01-03-2018 |
| | | WO 2016139358 A1 | 09-09-2016 |
| | | ZA 201705256 B | 26-06-2019 |
| US 2020236929 A1 | 30-07-2020 | AR 117892 A1 | 01-09-2021 |
| | | AU 2020200498 A1 | 13-08-2020 |
| | | BR 102020001365 A2 | 04-08-2020 |
| | | CA 3069202 A1 | 24-07-2020 |
| | | CN 111466376 A | 31-07-2020 |
| | | EP 3685666 A1 | 29-07-2020 |
| | | US 2020236929 A1 | 30-07-2020 |
| US 2015296772 A1 | 22-10-2015 | AU 2015247525 A1 | 17-11-2016 |
| | | AU 2018200692 A1 | 15-02-2018 |
| | | AU 2019216712 A1 | 05-09-2019 |
| | | BR 112016023942 A2 | 15-08-2017 |
| | | CA 2945786 A1 | 22-10-2015 |
| | | CN 106455548 A | 22-02-2017 |
| | | EP 3131393 A1 | 22-02-2017 |
| | | JP 2017511370 A | 20-04-2017 |
| | | TW 201542088 A | 16-11-2015 |
| | | US 2015296772 A1 | 22-10-2015 |
| | | UY 36089 A | 30-10-2015 |
| | | WO 2015161095 A1 | 22-10-2015 |
| US 2006180677 A1 | 17-08-2006 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014071374 A
- WO 2013189773 A
- WO 2014139975 A
- WO 2015091617 A
- WO 2017197066 A
- WO 2019094684 A
- WO 2021043642 A
- WO 2019236738 A
- WO 2013011122 A
- WO 03095497 A
- US 20010051140 A
- US 20140128264 A
- US 20150264924 A

### Non-patent literature cited in the description

- The Pesticide Manual. The British Crop Protection Council and the Royal Soc. of Chemistry, 2012
- *CHEMICAL ABSTRACTS,* 827596-80-5